(19) **Europäisches Patentamt / European Patent Office / Office européen des brevets**

(11) **EP 0 923 243 B1**

(12) **EUROPEAN PATENT SPECIFICATION**

(45) Date of publication and mention
of the grant of the patent:
**15.09.2010 Bulletin 2010/37**

(51) Int Cl.:
***H04N 5/92*** *(2006.01)*

(21) Application number: **98933940.3**

(22) Date of filing: **27.07.1998**

(86) International application number:
**PCT/JP1998/003332**

(87) International publication number:
**WO 1999/005864 (04.02.1999 Gazette 1999/05)**

(54) **EDITING DEVICE, EDITING METHOD, SPLICING DEVICE, SPLICING METHOD, ENCODING DEVICE, AND ENCODING METHOD**

BEARBEITUNGSANLAGE, BEARBEITUNGSVERFAHREN, SPLEISSUNGSANLAGE, SPLEISSUNGSVERFAHREN, KODIERANLAGE UND KODIERVERFAHREN

DISPOSITIF D'EDITION, PROCEDE D'EDITION, DISPOSITIF D'EPISSAGE, PROCEDE D'EPISSAGE, DISPOSITIF DE CODAGE ET PROCEDE DE CODAGE

(84) Designated Contracting States:
**DE FR GB IT NL**

(30) Priority: **25.07.1997 JP 19992397**

(43) Date of publication of application:
**16.06.1999 Bulletin 1999/24**

(60) Divisional application:
**04076010.0 / 1 467 563**
**04076022.5 / 1 445 773**

(73) Proprietor: **Sony Corporation**
**Tokyo 141-0001 (JP)**

(72) Inventor: **YOSHINARI, Hiromi**
**Shinagawa-ku**
**Tokyo 141-0001 (JP)**

(74) Representative: **Turner, James Arthur et al**
**D Young & Co LLP**
**120 Holborn**
**London EC1N 2DY (GB)**

(56) References cited:
**EP-A- 0 694 921     WO-A-97/08898**
**JP-A- 6 253 331     JP-A- 8 037 640**
**JP-A- 8 149 408     JP-A- 10 112 840**

- **PATENT ABSTRACTS OF JAPAN vol. 1996, no. 10, 31 October 1996 (1996-10-31) -& JP 08 149408 A (MATSUSHITA ELECTRIC IND CO LTD), 7 June 1996 (1996-06-07)**
- **PATENT ABSTRACTS OF JAPAN vol. 018, no. 652 (E-1642), 12 December 1994 (1994-12-12) -& JP 06 253331 A (TOSHIBA CORP), 9 September 1994 (1994-09-09)**
- **WEE S J ET AL: "SPLICING MPEG VIDEO STREAMS IN THE COMPRESSED DOMAIN" IEEE WORKSHOP ON MULTIMEDIA SIGNAL PROCESSING. PROCEEDINGS OF SIGNAL PROCESSING SOCIETY WORKSHOP ON MULTIMEDIA SIGNAL PROCESSING, XX, XX, 23 June 1997 (1997-06-23), pages 225-230, XP000957700**

**EP 0 923 243 B1**

## EP 0 923 243 B1

**Description**

Technical Field

The present invention relates to an editing device for producing an image material edited by editing a plurality of image materials, a method therefor, a bit-stream splicing device for producing a seamless splicing streams by splicing a plurality of bit streams, a method therefor, an encoding device for encoding video data and a method therefor.

Background Art

In recent years, there have been suggested a recording/reproducing system for recording/reproducing compression-encoded image data using a storage medium, such as a DVD (Digital Versatile Disk or Digital Video Disk) which is an optical disk on which digital data in a large quantity can be recorded, and also a multiplex transmission system for multiplexing a plurality of compression-encoded broadcast materials (programs) and transmitting the broadcast materials has been suggested. The foregoing systems use a technique for compression-encoding of image data by the MPEG (Moving Picture Experts Group) standard.

In the MPEG standard, as an encoding method, a bidirectional predictive encoding method has been employed. The bidirectional predictive encoding method includes intra-frame encoding, inter-frame forward predictive encoding and bidirectional predictive encoding. Images formed by the respective encoding methods are called, I picture (intra encoded picture), P picture (predictive encoded picture) and B picture (bidirectionally predictive encoded picture), respectively. Moreover, I, P and B pictures are appropriately combined with one another so that a GOP (Group of Picture) serving as a unit which is used in a random access operation is constituted. In general, an amount of bits generated in each picture is such that a largest amount of bits is generated in the I picture, and a second largest amount of bits is generated in the P picture, and a smallest amount of bits is generated in the B picture.

In the encoding method, such as the MPEG standard, where an amount of generated bits varies in each picture, in order to appropriately transmit and decode obtained encoded bit streams (hereinafter simply called "streams") so as to obtain an image, the data occupation ratio in an input buffer of an image decoding device must be recognized by an image encoding device. Hence, the MPEG standard has a structure in which a VBV (Video Buffering Verifier) buffer is assumed which is a virtual buffer corresponding to an input buffer of the image decoding device. Moreover, the image encoding device must produce streams in such a manner that breakdown of the VBV buffer is prevented, that is, both of underflow and overflow are prevented.

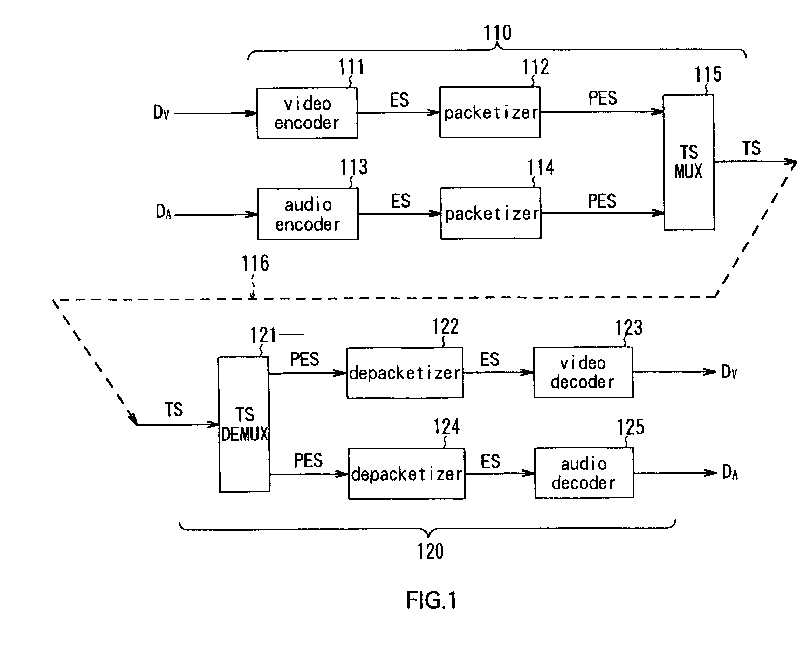

Referring to FIG. 1, the schematic structures of a transmission system and a recording/reproducing system conforming to the MPEG standard will now be described. FIG. 1 shows a transmission system structured to be capable of meeting requirements in ISO/IEC13818-1 (MPEG1) and ISO/IEC13818-2 (MPEG2).

The foregoing transmission system incorporates an encoding device 110 side with a video encoder 111 for encoding input video data $D_V$ to output a video elementary stream (video ES) which is an encoded bit stream; a packetizer 112 for adding a header and so on to the video elementary stream output from the video encoder 111 to form a packet so as to output a video packetized elementary stream (video PES); an audio encoder 113 for encoding input audio data $D_A$ to output an audio elementary stream (audio ES) which is an encoded bit stream; a packetizer 114 for adding a header and so on to the audio elementary stream output from the audio encoder 113 to form a packet so as to output an audio packetized elementary stream (audio PES); and a transport stream multiplexer 115 (expressed as TSMUX in the drawing) for multiplexing the video packetized elementary stream output from the packetizer 112 and the audio packetized elementary stream output from the packetizer 114 to produce a 188-byte transport stream packet so as to output the packet as a transport stream (TS).

The transmission system shown in FIG. 1 incorporates a decoding device 120 side with a transport stream demultiplexer (expressed as "TSDEMUX" in the drawing) 121 for receiving the transport stream output from the transport stream multiplexer 115 through a transmission medium 116 to separate the transport stream into a video packetized elementary stream (video PES) and an audio packetized elementary stream (audio PES) from each other and to output the video PES and audio PES; a depacketizer 122 for depacketizing the video packetized elementary stream output from the transport stream demultiplexer 121 to output a video elementary stream (video ES); a video decoder 123 for decoding the video elementary stream output from the depacketizer 122 so as to output video data $D_V$; a depacketizer 124 for depacketizing the audio packetized elementary stream output from the transport stream demultiplexer 121 so as to output an audio elementary stream (audio ES); and an audio decoder 125 for decoding the audio elementary stream output from the depacketizer 124 so as to output audio data $D_A$.

The decoding device 120 shown in FIG. 1 is, in general, called an intelligent receiver/decoder (IRD).

In a recording/reproducing system for recording encoded data on a storage medium, a program stream multiplexer for multiplexing the video packetized elementary stream and the audio packetized elementary stream so as to output a program stream (PS) is provided in place of the transport stream multiplexer 115 shown in FIG. 1. In place of

2

the transmission medium 116, a storage medium on which the program stream is recorded is provided. In place of the transport stream demultiplexer 121, a program stream demultiplexer is provided which separates the program stream into the video packetized elementary stream and the audio packetized elementary stream from each other.

Operations of the system shown in FIG. 1 will now be described as an example, which are performed regarding to a case where a process for encoding video data, a process for transmitting the encoded video data and a process for decoding the transmitted video data are performed, respectively.

In the encoding device 110 side, input video data $D_V$ of each picture which has the same amount of bits is encoded by the video encoder 111. Then, video data $D_V$ for each picture is converted and compressed into different amount of bits corresponding to the redundancy of the video data $D_V$ so as to be output as the video elementary stream. The packetizer 112 receives the video elementary stream to form the video elementary stream into a packet in order to absorb (average) change in the amount of bits along the time axis of the bit stream. Then, the packet is output as a video packetized elementary stream (PES). The PES packet obtained by the packetizer 112 is composed of one access unit or a plurality of access units. In general, one access unit is composed of one frame. The transport stream multiplexer 115 multiplexes the video packetized elementary stream and the audio packetized elementary stream output from the packetizer 114 to produce the transport stream packet so as to transmit it as the transport stream (TS) to the decoding device 120 through the transmission medium 116.

In the decoding device 120 side, the transport stream is separated into the video packetized elementary stream and the audio packetized elementary stream by the transport stream demultiplexer 121. The depacketizer 122 depacketizes the video packetized elementary system to output the video elementary stream. The video decoder 123 decodes the video elementary stream to output video data $D_V$.

The decoding device 120 buffers the streams transmitted at a predetermined transmission rate into the VBV buffer and fetches data for each picture from the VBV buffer in accordance with a decoded time stamp (DTS) previously set to each picture. The capacity of the VBV buffer is previously determined in accordance with the standard of the signal which must be transmitted. If a standard main-profile and main-level (MP@ML) video signal is transmitted, the VBV buffer has a capacity of 1.75 MB. The encoding device 110 must control an amount of bits of each picture which must be generated in such a manner that overflow and underflow of the VBV buffer are prevented.

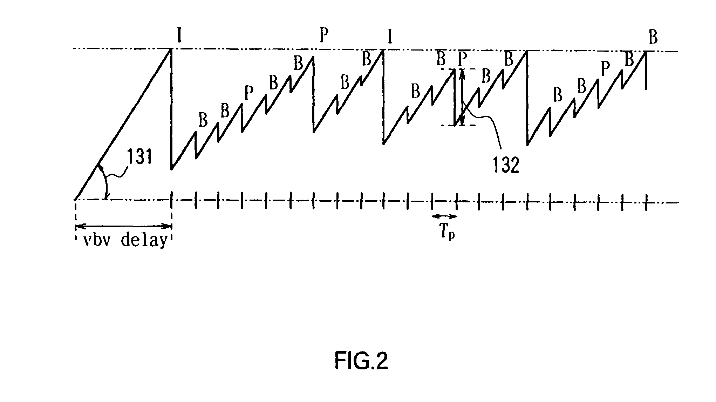

Referring to FIG. 2, the VBV buffer will now be described. In FIG. 2, a broken line indicates change in the amount of bits occupation which must be stored in the VBV buffer. Inclination 131 of the broken line indicates a transmission bit rate, a vertically downward portion 132 indicates an amount of bits which is fetched from the VBV buffer by the video decoder 123 for the purpose of reproducing each picture. A timing at which the video decoder 123 fetches the bits is instructed in accordance with information called "presentation time stamp (PTS)" or information called "decoded time stamp (DTS)". The interval of each of PTS and DTS is usually one frame period. In FIG. 2, I, P and B represent I picture, P picture and B picture, respectively. This applies to other drawings. In FIG. 2, expression vbv_delay indicates time taken from a state in which the amount of occupation in the VBV buffer is zero to a full state. Expression $T_P$ indicates cycles of presentation time. In the decoder side, the VBV buffer is filled with the transmitted streams at the predetermined bit rate 131, as shown in FIG. 2. At timing determined in accordance with the presentation time, data for each picture is fetched from the VBV buffer.

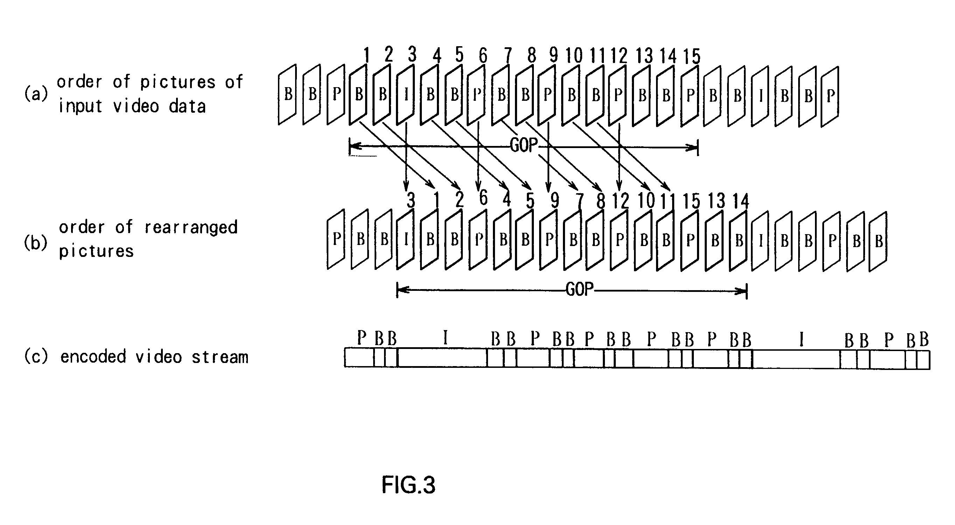

Referring to FIG. 3, rearrangement of pictures in the bi-directional predictive encoding method conforming to the MPEG standard will now be described. In FIG. 3, (a) shows an order of pictures of input video data which must be supplied to the encoder, (b) shows an order of pictures realized after rearrangement has been performed by the encoder and (c) shows an order of pictures of video streams output from the encoder. As shown in FIG. 3, in the encoder, input video frames are rearranged in accordance with the type of the picture (I, P or B) when the encoding operation is performed. Thus, the video frames are encoded in accordance with the rearranged order. Specifically, B picture is predictively encoded from I picture or P picture. Therefore, rearrangement is performed as shown in FIG. 3 (b) such that the B pictures are positioned in the rear of the I picture or the P picture each of which is used in the predictive encoding operation. The encoder performs the encoding processes in the order of the rearranged pictures, followed by outputting each encoded picture as a video stream in orders as shown in FIGS. 3 (b) and 3 (c). The encoded stream output as described above is supplied to the decoder or the storage medium through a transmission passage. Note that FIG. 3 shows a GOP which is composed of 15 pictures.

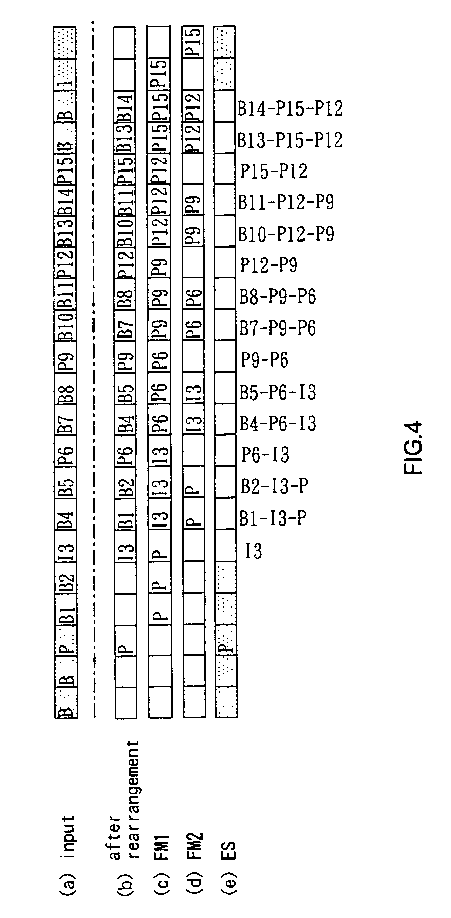

FIG. 4 is a diagram showing a picture which is used when each picture is predictively encoded in the predictive encoding method shown in FIG. 3. FIG. 4 shows the relationship between rearrangement of pictures and the predictive encoding process in decoder. In FIG. 4, (a) shows an order of pictures in video data supplied to the encoder, (b) shows an order of pictures rearranged by the encoder, (c) and (d) show pictures which are stored in two frame memories FM1 and FM2 in the encoder and (e) shows the elementary stream (ES) which is output from the encoder. Note that numerals accompanying I, P and B shown in the drawings represent orders of pictures. In the encoder, input video data shown in FIG. 4 (a) is rearranged to an order of pictures as shown in FIG. 4 (b). In the two frame memories FM1 and FM2, pictures as shown in FIGS. 4 (c) and 4 (d) are stored. When input video data is I picture, the encoder performs the encoding process in accordance with only the supplied video data (I picture). When input video data is P picture, the encoder performs the predictive encoding process in accordance with input video data and the I picture or the P picture stored in the frame memory FM1. When input video data is B picture, the encoder performs the predictive encoding process in accordance with input video data and two pictures stored in the frame memories FM1 and FM2. Symbols in FIG. 4 (e) represent pictures for use in the encoding process.

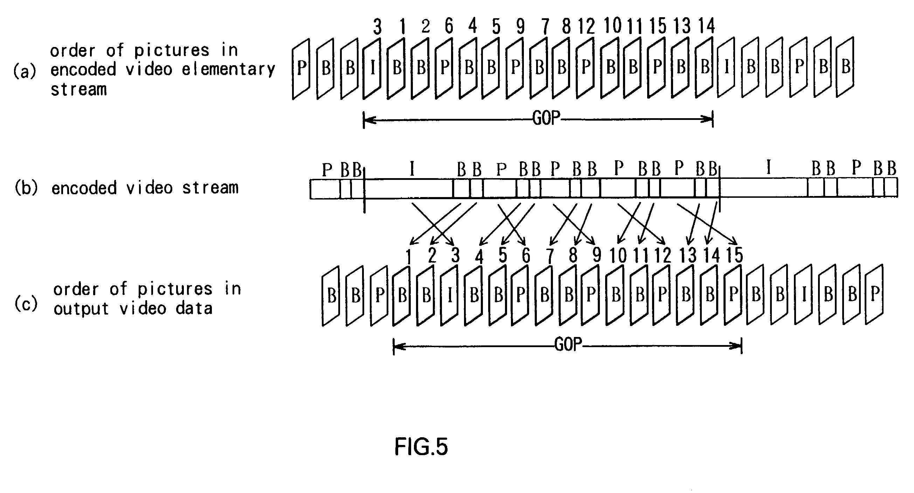

Referring to FIG. 5, rearrangement of pictures which is performed by the bi-directional predictive decoding method conforming to the MPEG standard will now be described. In FIG. 5 (a) shows an order of pictures in an encoded video stream supplied from the encoder to the decoder through the transmission passage, (b) shows the encoded video stream supplied from the encoder to the decoder through the transmission passage and (c) shows an order of pictures of video data output from the decoder. As shown in FIG. 5, the decoder performs a predictive encoding process of B picture by using I picture or P picture when the encoding process is performed. Therefore, the same picture as that used in the foregoing predictive encoding process is used to perform a decoding process. As a result, an order of pictures of video data output from the foregoing decoder is made such that B picture is output earlier than as compared with I picture and P picture.

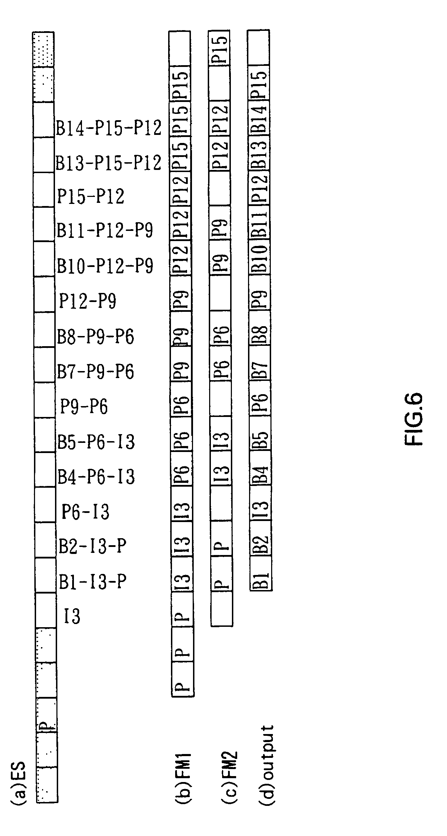

FIG. 6 is a diagram, in detail, showing the decoding process shown in FIG. 5. In FIG. 6, (a) shows an order of pictures in an encoded video elementary stream (ES) which is supplied to the decoder, (b) and (c) show pictures which are stored in the two frame memories FM1 and FM2 in the decoder and (d) shows video data output from the decoder. Similarly to FIG. 4, numerals accompanying I, P and B represent orders of pictures. When an elementary stream (ES) as shown in FIG. 6 (a) is input to the decoder, the decoder must store the two pictures used in the predictive encoding process. Therefore, pictures shown in FIG. 6 (b) and 6 (c) are stored in the two frame memories FM1 and FM2. When the input elementary stream is I picture, the decoder performs a decoding process only in accordance with the input elementary stream (I picture). When the input elementary stream is P picture, the decoder performs the decoding process in accordance with the input elementary stream and the I picture or the P picture stored in the frame memory FM1. When the supplied elementary stream is B picture, the decoder performs the decoding process in accordance with the input elementary stream and the two pictures stored in the frame memories FM1 and FM2. Thus, the decoder outputs video data as shown in FIG. 6 (d).

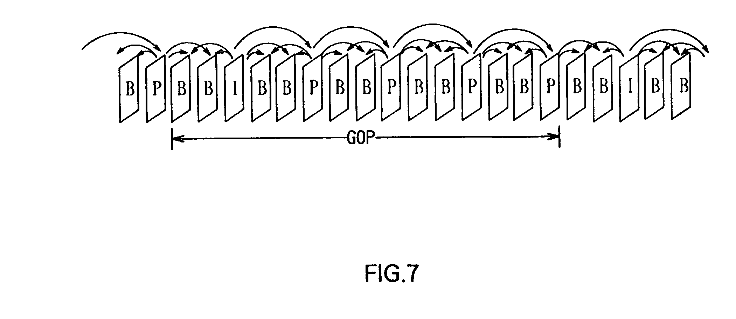

Referring to FIG. 7, motion detection and motion compensation operations which are performed in the bi-directional predictive encoding method conforming to the MPEG standard will now be described. FIG. 7 shows a direction of prediction (a direction in which the difference is obtained) between pictures arranged in an order of the input video frames by using arrows. The MPEG standard employs motion compensation which is able to realize a high compression ratio. The encoder which must perform the motion compensation carries out motion detection in the direction of the prediction shown in FIG. 7 when the encoder performs the encoding operation. Thus, the encoder obtains a motion vector. The P picture and the B picture are composed of the motion vector and the difference value from a search picture or a predictive picture obtained in accordance with the motion vector. When a decoding operation is performed, P picture and B picture are re-constituted in accordance with the motion vector and the difference value.

In general, as shown in FIG. 7, I picture is a picture encoded from information in the I picture, the I picture being a picture which has been produced without performing the inter-frame prediction. P picture is a picture produced by performing prediction from the previous I picture or P picture. B picture is any one of a picture bi-directionally predicted from previous I picture or P picture and future I picture and P picture, a picture predicted from a forward direction of previous I picture or P picture or a picture predicted from backward direction of I picture or P picture.

In an editing system employed by a broadcast station, video materials recorded by using a cam coder or a digital VTR at a scene of a material collection, video materials transmitted from a local station or a company for supplying programs are edited so that one video program for broadcast is produced. Video materials recorded by using a cam coder or a digital VTR and video materials supplied from a local station or a company for supplying programs are, by the MPEG technique, usually compression-encoded so as to be supplied as encoded streams. The reason for this lies in that a recording area of a recording medium can effectively be used when the video data is compression-encoded by using the MPEG technique as compared with a structure in which base band video data which is not compressed is directly recorded on the recording medium. Moreover, the transmission passage can effectively be used when video data is compression-encoded by using the MPEG technique as compared with a structure in which base band video data which is not compressed is directly transmitted.

In the conventional editing system, when two encoded video streams are edited to produce one video program for broadcast, all of data items of encoded stream must first be decoded so as to restore data to base band video data. The reason for this lies in that the encoded streams cannot be connected to each other at an arbitrary position on the stream because the direction of prediction of each picture included in the encoded stream conforming to the MPEG standard has a mutual relationship with the direction of prediction of forward and rearward pictures. If the two encoded streams are forcibly connected to each other, the seam becomes discontinuous. Thus, accurate decoding cannot be performed.

When two encoded streams which have been supplied are edited in the conventional editing system, there is a necessity of performing a decoding process for first decoding two source encoded streams to produce video data in two base bands; an editing process for editing video data in the two base bands to produce edited video data for broadcast; and an encoding process for again encoding edited video data to produce an encoded video stream.

Since MPEG encoding is not a 100 % reversible encoding, there, however, arises a problem in that the decoding process and the encoding process for only the editing process encounter deterioration in image quality. That is, when an editing process is performed by the conventional editing system, the decoding process and the encoding process must be performed. Thus, the image quality deteriorates correspondently.

As a result, a technique has been required in recent years with which an operation of directly editing an encoded stream is permitted such that all of supplied encoded streams are not subjected to the decoding process. Note that a process for connecting two different encoded bit streams to each other in the encoded bit stream level and producing a connected bit streams is called "splicing". That is, the term "splicing" means edition of a plurality of streams in a state of the encoded streams.

However, when splicing is realized, three critical problems arise as follows.

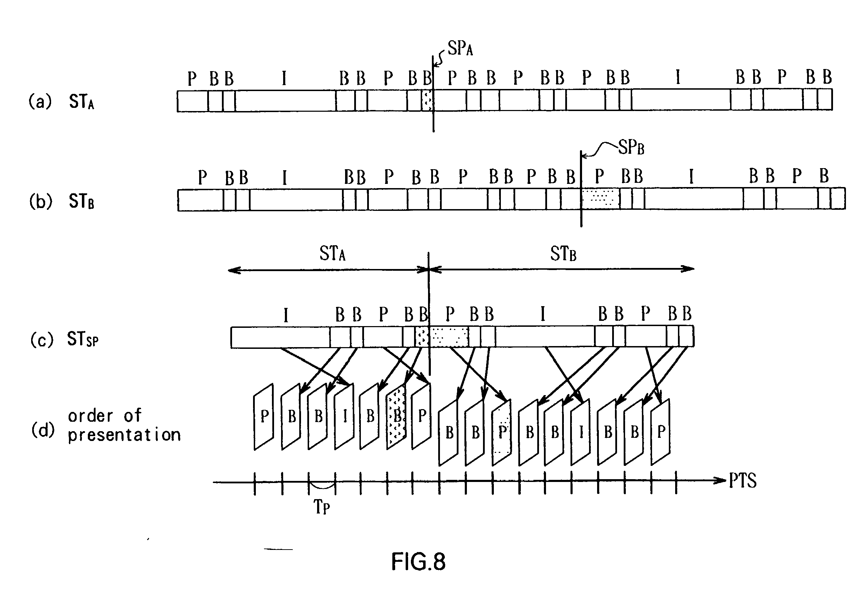

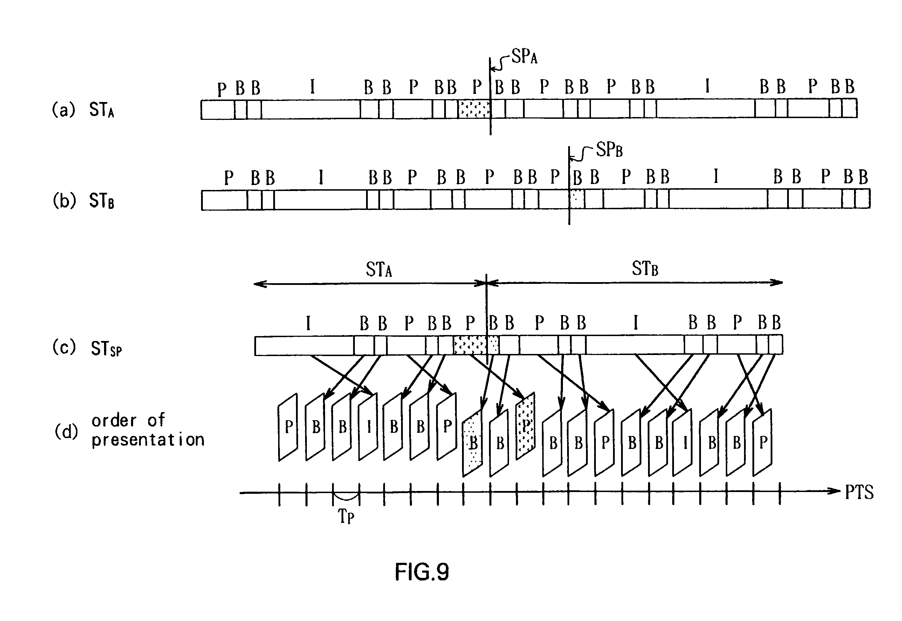

A first problem arises from a viewpoint of the order of picture presentation. The order of picture presentation is an order of displaying video frames. The first problem will now be described with reference to FIGS. 8 and 9.

Each of FIGS. 8 and 9 shows the relationship between an order of pictures in streams realized before and after splicing and an order of picture presentation realized after splicing when streams are simply spliced. FIG. 8 shows a case in which no problem arises in the order of the picture presentation. FIG. 9 shows a case in which a problem arises in the order of the picture presentation. In FIGS. 8 and 9, (a) shows video stream A which is a video stream to be spliced, (b) shows video stream B which is another video stream to be spliced, (c) shows a stream realized after a splicing operation and (d) shows an order of presentation. $SP_A$ represents a splicing point in the stream A, $SP_B$ represents a splicing point in the stream B, $ST_A$ represents the stream A, $ST_B$ represents the stream B and $ST_{SP}$ represents a spliced stream.

Since the encoder performs the rearrangement, the order of pictures in the encoded stream realized after the encoding process has been performed is different from the order of presentation realized after the decoding process. FIG. 8 shows an example in which the splicing process in which the splicing point $SP_A$ is set in the rear of the B picture of the stream A and splicing point $SP_B$ is set in front of the P picture of the stream B. As shown in FIG. 8 (d), a phenomenon that pictures in the stream A are displayed in the rear of the pictures in the stream B or a phenomenon that pictures in the stream B are displayed in front of pictures in the stream A does not occur with respect to a boundary SP between the stream A and the stream B. That is, if splicing is performed at the splicing points $SP_A$ and the splicing point $SP_B$ shown in FIG. 8, no problem arises in the order of the presentation.

On the other hand, FIG. 9 shows a splicing process in which splicing point $SP_A$ is set in the rear of P picture in the stream A and splicing point $SP_B$ is set in front of B picture in the stream B. As shown in FIG. 8 (d), a phenomenon occurs such that a final picture in the stream A is displayed in the rear of the picture in the stream B or a phenomenon occurs such that two pictures in the stream B are displayed in front of the final picture in the stream A with respect to the boundary SP between the stream A and the stream B. That is, when pictures are displayed in the foregoing order, the video image of the stream A is switched to the video image of the stream B in the vicinity of the splicing point. Then, only one frame of the video image of the stream A is again displayed two frames after the foregoing switching. Thus, a strange image is undesirably formed. That is, if splicing is performed at the splicing points $SP_A$ and $SP_B$ shown in FIG. 9, a problem arises in the order of the presentation.

Therefore, if splicing is performed at an arbitrary picture position, there sometimes arises a problem in the order of presentation.

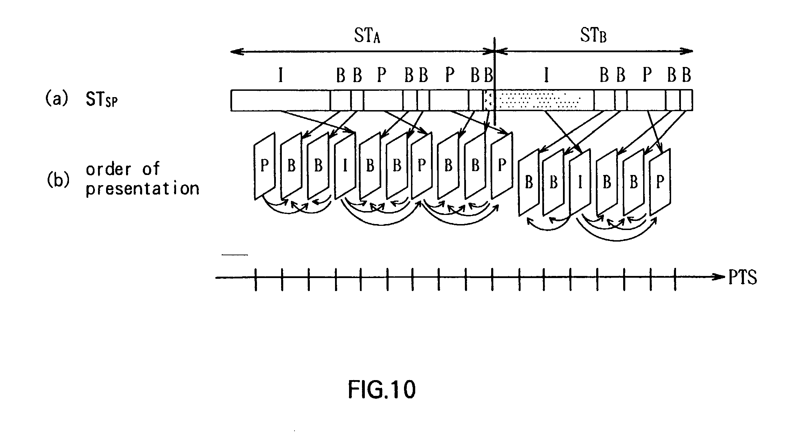

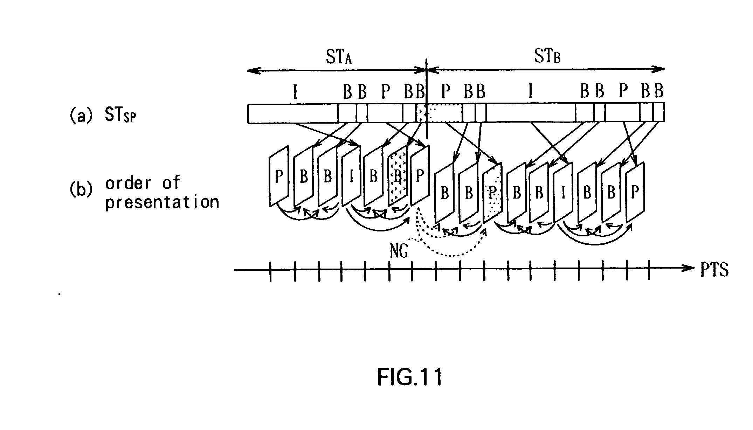

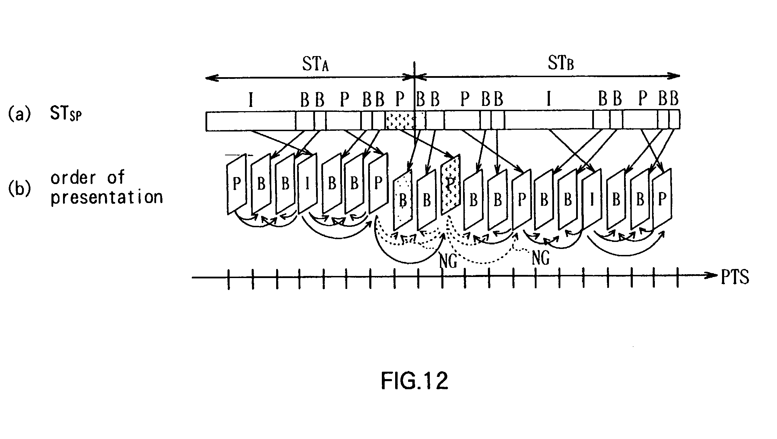

A second problem arises from a viewpoint of the motion compensation. The foregoing problem will now be described with reference to FIGS. 10 to 12. Each of the drawings shows the relationship of an order of pictures in a stream and an order of picture presentation which is performed after a splicing operation has been performed when streams are simply spliced. FIG. 10 shows an example in which no problem arises in the motion compensation and FIGS. 11 and 12 show a case in which a problem arises in the motion compensation. Each of FIGS. 11 and 12 shows a case in which splicing shown in FIGS. 8 and 9 has been performed. In each drawing, (a) shows a stream realized after splicing has been performed and (b) shows an order of presentation.

In the example shown in FIG. 10, the stream B is in the form of a closed GOP (a GOP, the prediction of which does not depend on a previous GOP and which is a closed GOP). As splicing is performed at the ends of the GOP, an appropriate motion compensation can be performed, causing pictures to be decoded without any problem.

On the other hand, FIGS. 11 and 12 show a case in which motion compensation making a reference to a picture is performed in different streams when a decoding operation is performed. Therefore, there arises a problem in the motion compensation. Specifically, since B picture and P picture of the stream B cannot be made by making a reference to the P picture in the stream A, the motion compensation which is performed by dint of the motion vector in a direction of prediction indicated with a dashed line shown in the drawing is invalid (which is indicated as "NG" in the drawing). Therefore, in the examples shown in FIGS. 11 and 12, breakdown of the picture is undesirably maintained until a next I picture.

When splicing is performed at an arbitrary picture units, simple splicing on a stream cannot resolve the above-mentioned problem.

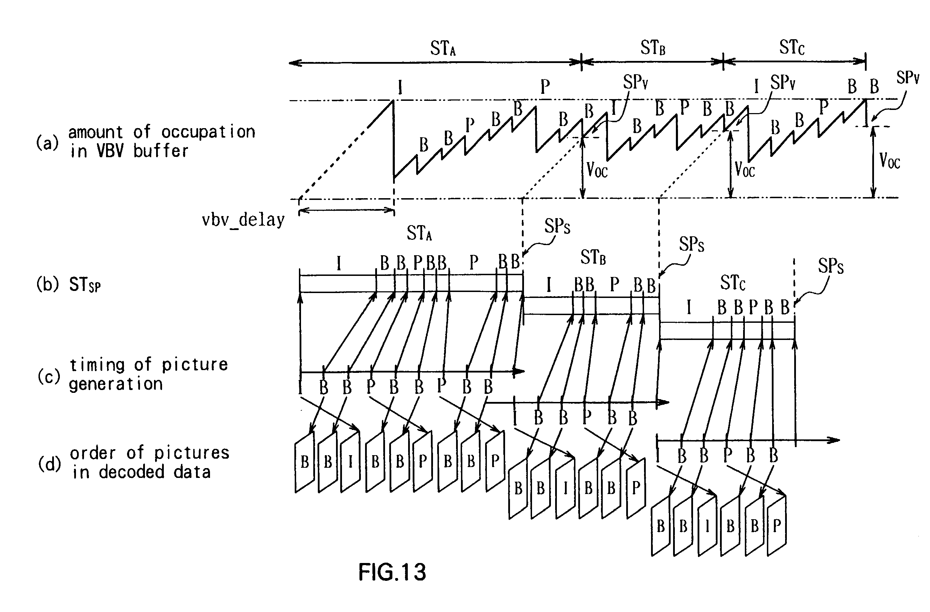

A third problem arises from a viewpoint of the VBV buffer. The foregoing problem will now be described with reference to FIGS. 13 to 18. FIG. 13 shows an example in which ideal stream splicing has been performed which satisfies the conditions of the order of picture presentation, motion compensation and the VBV buffer. $ST_A$, $ST_B$ and $ST_C$ represent stream A, stream B and stream C. In FIG. 13, (a) shows a state of a VBV buffer in the decoder side, (b) shows a stream after the splicing, (c) shows timing at which each of pictures is generated after the rearrangement has been performed by the encoder and (d) shows an order of pictures after the decoding operation has been performed. Referring to FIG. 13, $SP_V$ represents a splicing point in the VBV buffer, Voc represents an amount of occupation in the VBV buffer at the splicing point $SP_V$ and $SP_S$ represents a splicing point in the stream. In the example shown in FIG. 13 from a viewpoint of the VBV buffer, any breakdown of the VBV buffer, such as overflow or an underflow of the VBV buffer, is not caused from splicing.

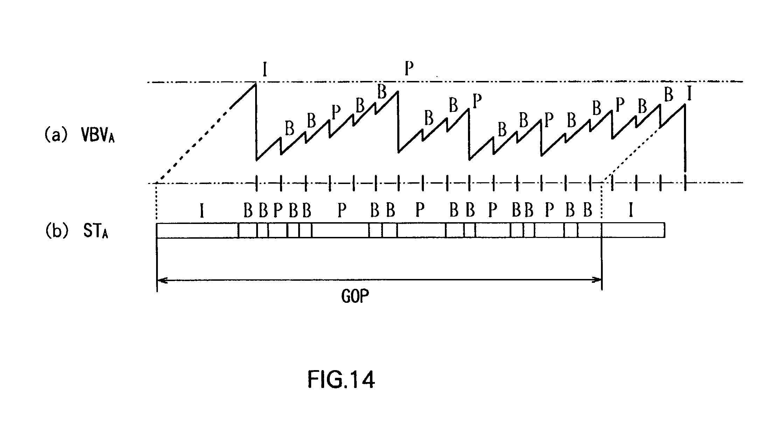

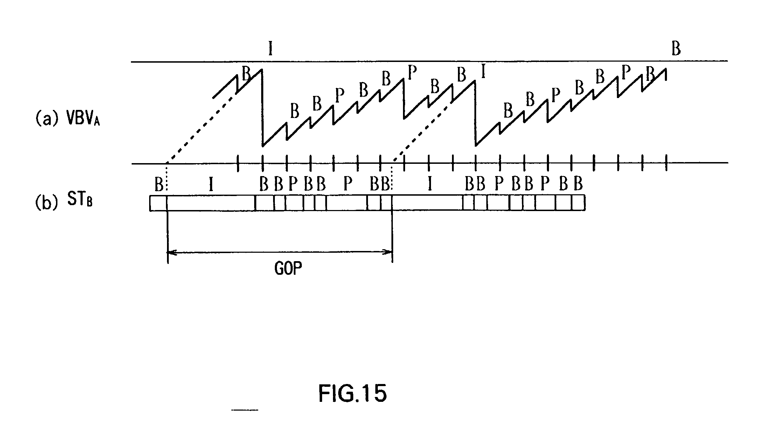

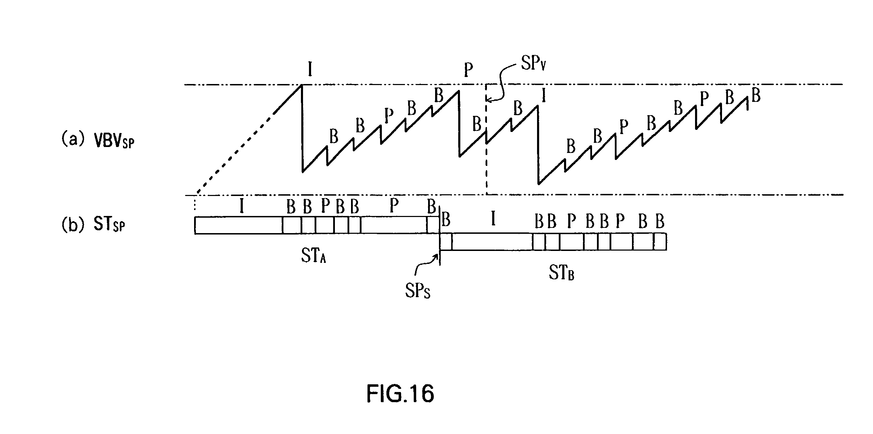

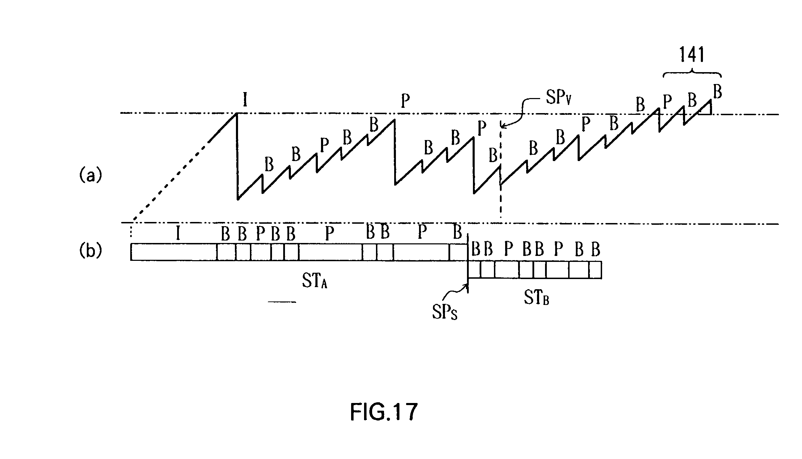

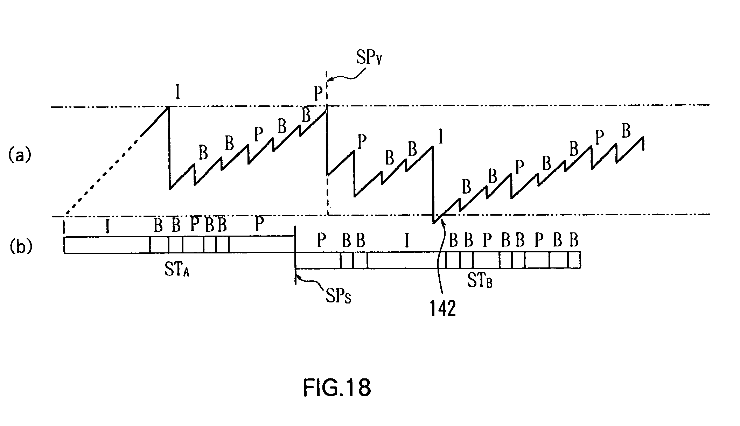

However, when splicing is performed in arbitrary units, the conditions under which breakdown of the VBV buffer is prevented are not always satisfied. The foregoing fact will now be described with reference to FIGS. 14 to 18. FIGS. 14 and 15 show normal stream A and stream B which satisfy the limitation for the VBV buffer. (a) shows a state of a VBV buffer in the decoder side and (b) shows streams A and B. Three examples in each of which the streams A and B have simply been spliced at arbitrary positions are shown in FIGS. 16 to 18. In the drawings, (a) shows a state of a VBV buffer in the decoder and (b) shows a stream realized after splicing has been performed. The positions at which the streams A and B are spliced vary the state of the VBV buffer. In the example shown in FIG. 16, the spliced stream satisfies a limitation for the VBV buffer. In the example shown in FIG. 17, overflow given reference numeral 141 has occurred. Thus, the limitation for the VBV buffer is not satisfied. In the example shown in FIG. 18, underflow given reference numeral 142 has occurred. In the decoder side (IRD), if underflow or overflow of the VBV buffer occurs, breakdown of the VBV buffer results in a failure in decoding pictures. Thus, a seamless image reproduction cannot be realized. The image reproduction in the foregoing case includes skipping of an image, freezing, interruption of the process and the like depending on the function of the encoder (IRD). If splicing is performed at an arbitrary picture unit, the above-mentioned problem cannot be resolved by simple splicing on the stream.

As described above, the conventional technique has a problem in that any effective means cannot be obtained which realizes seamless splicing on a stream.

WO97/08898 discloses a device for switching between bit-rate reduced signals. An output switch is arranged to switch between bitstream A, an interim bitstream and bitstream B. The interim bitstream is produced to reduce discontinuities when switching between the streams. The data occupancy of the re-coder in the interim bit stream is constrained to follow that of the upstream coder, enabling a switch to be made from the bit-rate reduced signal without discontinuity in the downstream decoder buffer.

Disclosure of the invention

"Splicing MPEG Video Streams in the Compressed Domain" by Wee et al pages 225 - 230, IEEE 1997, XP000957700 discloses an algorithm for splicing two MPEG -coded video streams which only processes the portion of each video stream that contains frames affected by the splice. It uses rate control to ensure that the resulting spliced stream satisfies the buffer constraints. It discloses two possible ways of preventing overflow or underflow of the VBV buffer by "some form of rate control". These include requantizing the DCT coefficients in the frames near the splice point to obtain a suitable match or the setting of the I frames near the splice point to P frames.

JP-A-08149408 discloses the cutting of two data streams at a GOP junction. The cut data are stored in a memory and the data is reconstructed. Stuffing data may be used but few details are given.

In view of the foregoing, a first object of the present invention is to provide a splicing device and a stream editing device which are capable of relizing seamless splicing of a plurality of encoded streams so as to prevent breakdown of a virtual buffer, which corresponds to an input buffer of a decoding device side, and discontinuation of data occupation amount in the virtual buffer.

In addition to the above-mentioned object, a second object of the present invention is to provide a splicing device, a stream editing device and an encoding device which are capable of preventing deterioration in image quality in the vicinity of the splicing point and preventing deterioration in image quality occurring in a re-encoding process.

Various aspects of the present invention are set out in the appended claims.

In the stream editing device according to embodiments of the present invention, the decoding means decodes each encoded bit stream in the predetermined region positioned in front and rear of the connection point including the connection point of the plurality of encoded bit streams and output image data in the predetermined region. The target-code-amount setting means sets a new target amount of bits for image data in the predetermined region. The encoding means codes image data in the predetermined region in accordance with the new target amount of bits and output a new encoded bit stream in the predetermined region. The encoded bit stream output means substitutes the new encoded bit stream in the predetermined region for the original encoded bit original encoded bit streams and the new encoded bit stream across the predetermined region are connected to each other to be output.

Brief Description of Drawings

FIG. 1 is a block diagram showing a schematic structure of a transmission system conforming to the MPEG standard;
FIG. 2 is an explanatory diagram showing a VBV buffer;
FIG. 3 is an explanatory diagram showing picture rearrangement which is performed by an encoder which is required for a bidirectional predictive encoding method conforming to the MPEG standard;
FIG. 4 is an explanatory diagram showing the relationship between the picture rearrangement and an encoding process which is performed by the encoder;
FIG. 5 is an explanatory diagram showing picture rearrangement which is performed by a decoder;
FIG. 6 is an explanatory diagram showing the relationship between the picture rearrangement and a decoding process which is performed by the decoder;
FIG. 7 is an explanatory diagram showing motion detection and motion compensation which is performed by the bidirectional predictive encoding method conforming to the MPEG standard;
FIG. 8 is an explanatory diagram showing an example of the relationship between an order of pictures in a stream before and after a splicing operation and an order of picture presentation after the splicing operation when streams have simply been spliced;
FIG. 9 is an explanatory diagram showing another example of the relationship between an order of pictures in a stream before and after the splicing operation and an order of picture presentation after the splicing operation when streams have simply been spliced;
FIG. 10 is an explanatory diagram showing an example of the relationship between an order of pictures in a stream after the splicing operation and an order of picture presentation when streams have simply been spliced;
FIG. 11 is an explanatory diagram showing another example of the relationship between an order of pictures in a stream after the splicing operation and an order of picture presentation when streams have simply been spliced;
FIG. 12 is an explanatory diagram showing another example of the relationship between an order of pictures in a stream after the splicing operation and an order of picture presentation when streams have simply been spliced;
FIG. 13 is an explanatory diagram showing an example of an ideal stream splice meeting conditions required for an order of picture presentation, motion compensation and the VBV buffer;
FIG. 14 is an explanatory diagram showing a normal stream which meets a limitation for the VBV buffer;
FIG. 15 is an explanatory diagram showing another normal stream which meets the limitation for the VBV buffer;
FIG. 16 is an explanatory diagram showing an example in which two streams have simply been spliced at an arbitrary position;
FIG. 17 is an explanatory diagram showing another example in which two streams have simply been spliced at an arbitrary position;
FIG. 18 is an explanatory diagram showing another example in which two streams have simply been spliced at an arbitrary position;
FIG. 19 is a block diagram showing the configurations of a splicing device and a stream editing device according to an embodiment of the present invention;
FIG. 20 is a block diagram showing the configurations of the MPEG decoder and the MPEG encoder shown in FIG. 19;
FIG. 21 is an explanatory diagram showing an example of a splicing point and a re-encoding range in presentation video data obtained by a decoding operation performed by the MPEG decoder shown in FIG. 19;
FIG. 22 is an explanatory diagram showing the arrangement of pictures in the two streams shown in FIG. 21 before and after a decoding operation;
FIG. 23 is an explanatory diagram showing the arrangement of pictures of a spliced streams after a splicing operation in the example shown in FIG. 21;
FIG. 24 is an explanatory diagram showing a splicing point and a re-encoding range of presentation video data obtained by a decoding operation performed by the MPEG decoder shown in FIG. 19;
FIG. 25 is an explanatory diagram showing the arrangement of pictures in two streams before and after a decoding operation in the example shown in FIG. 24;
FIG. 26 is an explanatory diagram showing the arrangement of pictures in a spliced stream after a splicing operation in the example shown in FIG. 24;
FIG. 27 is an explanatory diagram showing an example in which underflow of amount of occupation of data in the VBV buffer is occurred;
FIG. 28 is an explanatory diagram showing an example of prevention of the underflow shown in FIG. 27 by the splicing device according to an embodiment of the present invention;

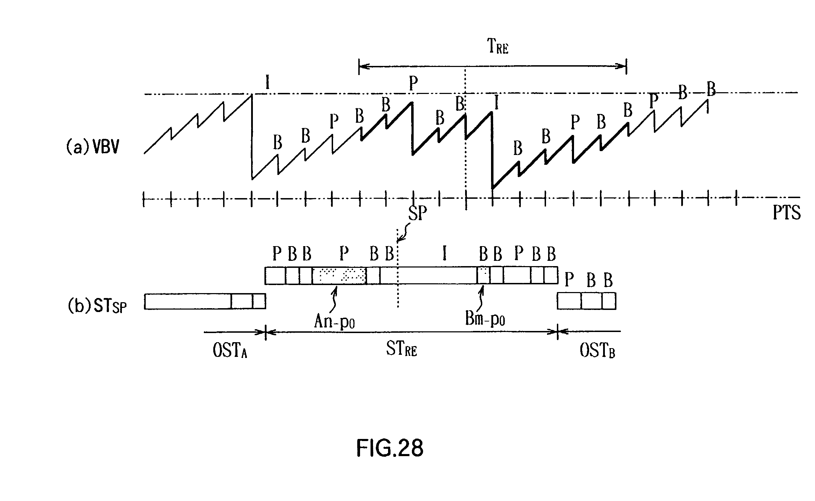

FIG. 28 is an explanatory diagram showing an example of overflow of the amount of occupation of data of the VBV buffer;

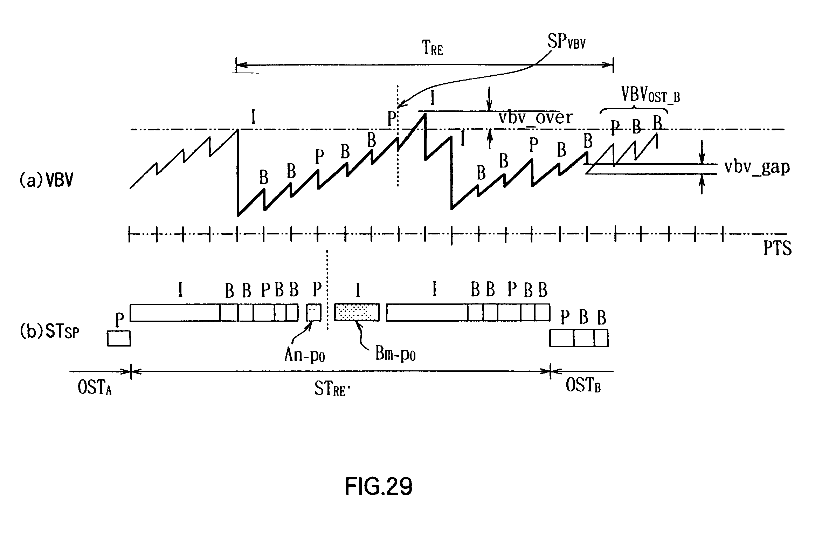

FIG. 29 is a diagram showing an example of prevention of the overflow shown in FIG. 28 by the splicing device according to an embodiment of the present invention; and

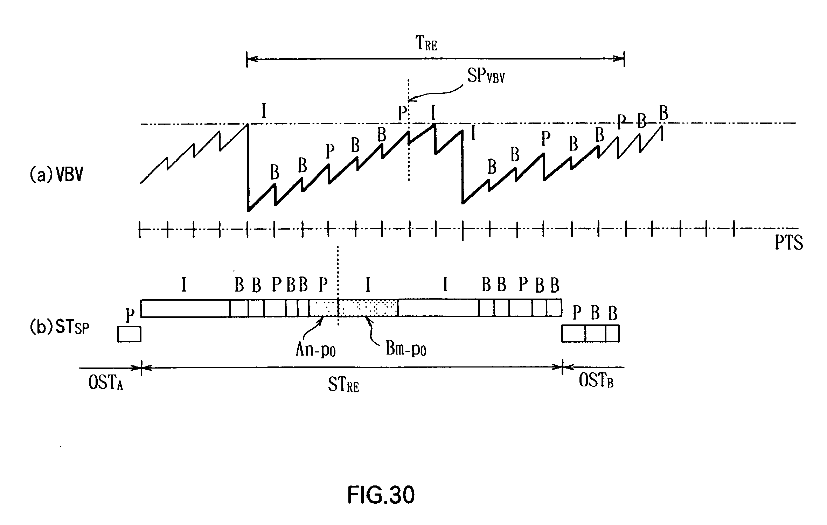

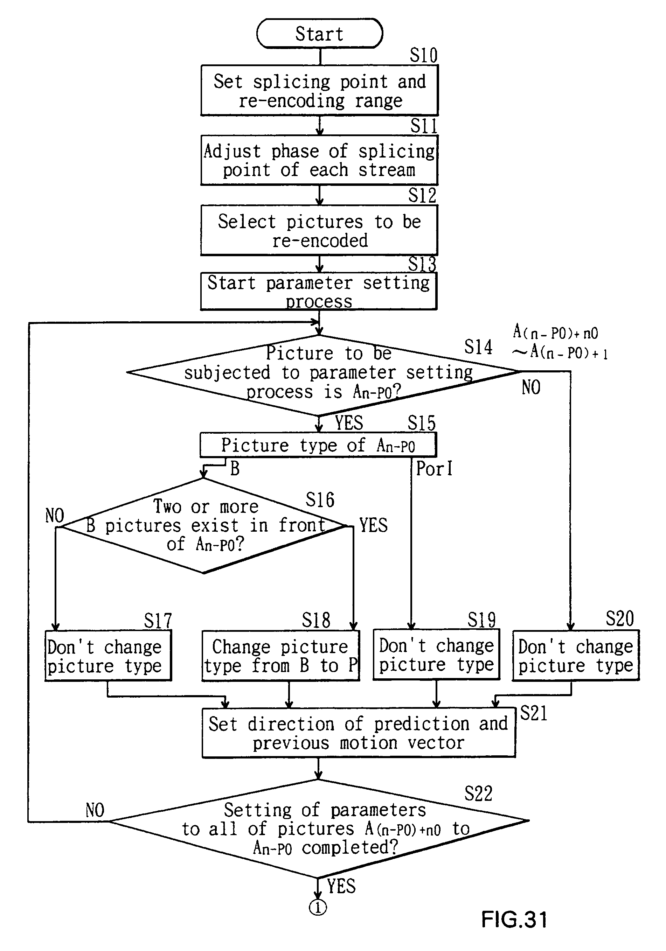

FIGS. 30 and 31 show a flow chart for explaining operation of the splicing device and a stream editing device according to an embodiment of the present invention.

Best Mode for Carrying Out the Invention

An embodiment of the present invention will now be described in detail with reference to the drawings.

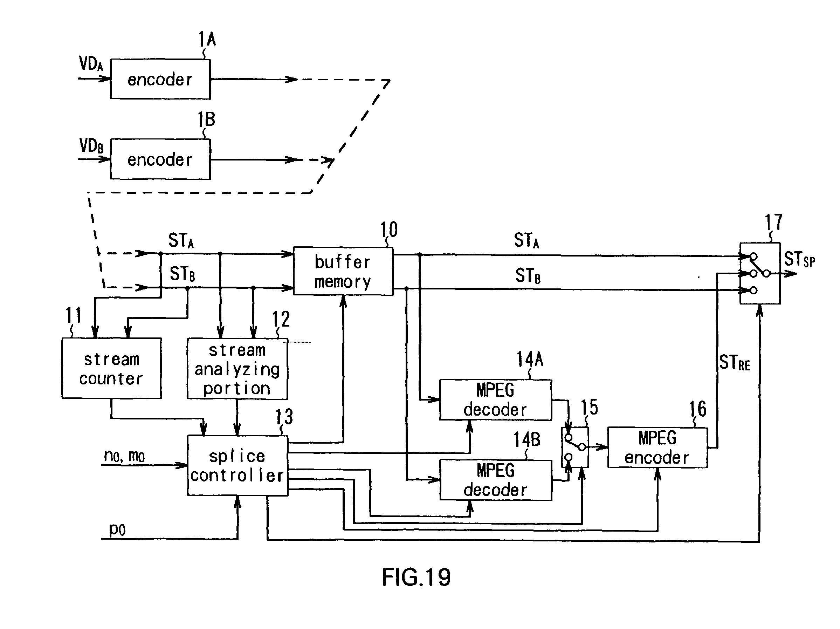

FIG. 19 is a block diagram showing the configurations of a splicing device and an editing device according to the invention. The splicing device and the editing device are arranged to receive, for example, a plurality of encoded bit streams (hereinafter simply called "streams) $ST_A$ and $ST_B$ obtained by encoding video data $VD_A$ and $VD_B$ of a plurality of image materials by encoders 1A and 1B by a bidirectional predictive encoding method conforming to the MPEG standard. The stream according to this embodiment may be any one of an elementary stream, a packetized elementary stream and a transport stream.

The splicing device and the editing device according to this embodiment incorporate a buffer memory 10 for receiving and storing the streams $ST_A$ and $ST_B$; a stream counter 11 for counting the number of bits of the streams $ST_A$ and $ST_B$; a stream analyzing portion 12 for analyzing the syntax of each of the streams $ST_A$ and $ST_B$; and a splice controller 13 for controlling each block to be described later for performing a splicing process.

Each of the splicing device and the editing device further incorporates MPEG decoders 14A and 14B for decoding streams $ST_A$ and $ST_B$ output from the buffer memory 10 in accordance with the MPEG standard and outputting a base band video data; a switch 15 for switching video data output from the MPEG decoders 14A and 14B; an MPEG encoder 16 for re-encoding video data output from the switch 15; and a switch 17 for performing switching between the streams $ST_A$ and $ST_B$ output from the buffer memory 10 and re-encoded stream $ST_{RE}$ output from the MPEG encoder 16 to output a spliced stream $ST_{SP}$.

Each of the above-mentioned blocks will now be described in detail.

The buffer memory 10 responds to a writing command issued from a splice controller 13 to be described later. Thus, the two supplied streams $ST_A$ and $ST_B$ are temporarily stored in the buffer memory 10. Moreover, the buffer memory 10 responds to a reading command issued from the splice controller 13 so that each of the stored streams $ST_A$ and $ST_B$ is read. As a result, the phases and timings of a splicing point between the streams $ST_A$ and $ST_B$ can be made coincide with each other in order to perform splicing at a determined splicing point set for the streams $ST_A$ and $ST_B$.

The stream counter 11 receives the streams $ST_A$ and $ST_B$, counts the number of bits of each of the received streams and supplies the count value to the splice controller 13. The reason why the number of bits of the supplied streams $ST_A$ and $ST_B$ is that the locus of an amount of bits occupation in a VBV buffer corresponding to the streams $ST_A$ and $ST_B$ must virtually be recognized.

The stream analyzing portion 12 analyzes the syntax of each of the streams $ST_A$ and $ST_B$ to fetch appropriate information from a sequence layer, a GOP layer, a picture layer and a macroblock layer. For example, encode information such as a picture type indicating the type of the picture (I, B or P), motion vectors, quantizer steps and quantizer matrices is fetched, followed by outputting the information to the splice controller 13. The encode information above is encode information generated in previous encoding processes performed by the encoders 1A and 1B, and the splicing device according to the present invention selectively uses previous encode information when a re-encoding process is performed.

The splice controller 13 receives the count value output from the stream counter 11, encode information output from the stream analyzing portion 12, parameters $n_0$ and $m_0$ for setting a re-encoding range and parameter $p_0$ for instructing a splicing point, and in accordance with input information, the splice controller 13 controls the switch 15, MPEG encoder 16 and the switch 17. Specifically, the splice controller 13 controls switching timing of the switch 15 in accordance with the input parameter $p_0$ and controls switching timing of the switch 17 in accordance with the parameters $n_0$, $m_0$ and $p_0$.

The splice controller 13 prevents overflow/underflow of the VBV buffer owning to the spliced streams in accordance with the count value supplied from the stream counter 11 and the stream analyzing portion 12 and encode information supplied from the stream analyzing portion 12. Moreover, the splice controller 13 prevents discontinuous locus of the amount of bits occupation in the VBV buffer owning to the spliced streams by calculating a new target amount of bits for each picture in the re-encoding range.

Moreover, the splice controller 13 controls, for example, a writing address and a reading address in the buffer memory 10 to adjust an amount of delay of each of the streams $ST_A$ and $ST_B$ in the buffer memory 10. Then, the splice controller 13 adjusts the phase of the splicing point of each of the streams $ST_A$ and $ST_B$ with reference to presentation time.

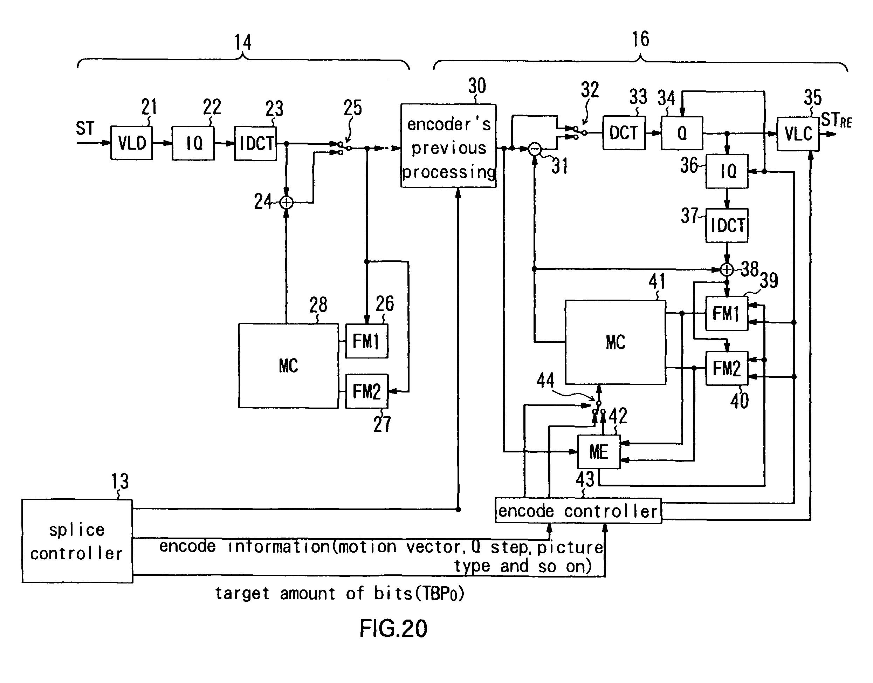

FIG. 20 is a block diagram showing the structures of the MPEG decoders 14A and 14B and the MPEG encoder 16 shown in FIG. 19. An MPEG decoder 14 represents the MPEG decoders 14A and 14B and stream ST represents the streams $ST_A$ and $ST_B$.

The MPEG decoder 14 incorporates a variable-length decoding circuit 21 (expressed as VLD in the drawing) for receiving the stream ST to variable-length-decoding the stream ST; a backward quantization circuit (expressed as IQ in the drawing) 22 for inversely quantizer data output from the variable-length decoding circuit 21; a backward DCT circuit (expressed as IDCT in the drawing) 23 for inversely DCT (inversely discrete cosine transforming) data output from the backward quantization circuit 22; an addition circuit 24 for adding data output from the backward DCT circuit 23 and predictive image data to each other; a switch 25 for selectively outputting either of data output from the backward DCT circuit 23 or data output from the addition circuit 24 as data output from the MPEG decoder 14; two frame memories (expressed as FM1 and FM2 in the drawing) 26 and 27 in which data output from the addition circuit 24 is stored; and a motion compensation portion (expressed as MC in the drawing) 28 for performing motion compensation in accordance with data stored in the frame memories 26 and 27 and information of the motion vector contained in the stream ST so as to output predictive image data to the addition circuit 24.

The MPEG encoder 16 incorporates an encoder's previous processing portion 30 for previously processing video data supplied from the MPEG decoder 14 for the encoding process by the MPEG encoder 16. The encoder's previous processing portion 30 rearranges pictures for the encoding process by the bidirectional predictive encoding method, forms 16 X 16 pixel macroblocks and calculates difficulty in encoding each picture.

Moreover, the MPEG encoder 16 incorporates a subtraction circuit 31 for calculating the difference between data output from the encoder's previous processing portion 30 and predictive image data; a switch 32 for selectively outputting either of data output from the encoder's previous processing portion 30 or data output from the subtraction circuit 31; a DCT circuit (expressed as DCT in the drawing) 33 for performing DCT of data output from the switch 32 in DCT (discrete cosine transform) block units so as to output a DCT coefficient; a quantizer circuit (expressed as Q in the drawing) 34 for quantizer data output from the DCT circuit 33; and a variable-length encoding circuit (expressed as VLC in the drawing) 35 for variable-length-encoding data output from the quantizer circuit 34 so as to output the same as re-encoded stream $ST_{RE}$.

Moreover, the MPEG encoder 16 incorporates a backward quantization circuit (expressed as IQ in the drawing) 36 for inversely quantizer data output from the quantizer circuit 34; a backward DCT circuit (expressed as IDCT in the drawing) 37 for performing backward DCT to data output from the backward quantization circuit 36; an addition circuit 38 for adding data output from the backward DCT circuit 37 and predictive image data to each other so as to output a result of the addition; two frame memories (expressed as FM1, FM2, in the drawing) 39 and 40 in which data output from the addition circuit 38 is stored; and a motion compensation portion (expressed as MC in the drawing) 41 for performing motion compensation in accordance with data stored in the frame memories 39 and 40 and information about the motion vector to produce predictive image data so as to output predictive image data to the subtraction circuit 31 and the addition circuit 38.

Moreover, the MPEG encoder 16 incorporates a motion detection circuit (expressed as ME in the drawing) 42 for detecting a motion vector in accordance with data stored in the frame memories 39 and 40 and data output from the encoder's previous processing portion 30 so as to output motion vector information; an encode controller 43 for receiving encode information and a target amount of bits supplied from the splice controller 13 so as to control the quantizer circuit 34, the backward quantization circuit 36 and the frame memories 39 and 40 in accordance with the information; and a switch 44 which is controlled by the encode controller 43 so as to selectively output either of information about the motion vector output from the encode controller 43 or information about the motion vector output from the motion detection circuit 42 to the motion compensation portion 41.

The operations of the MPEG decoder 14 and the MPEG encoder 16 shown in FIG. 20 will schematically be described.

In the MPEG decoder 14, the stream ST is variable-length-decoded by the variable-length decoding circuit 21, and inversely quantized by the backward quantization circuit 22, and then the backward DCT circuit 23 performs the backward DCT of the stream ST. Thus, data output from the backward DCT circuit 23 is input to the addition circuit 24 and the switch 25. In a case of I picture, data output from the backward DCT circuit 23 is output as data output from the MPEG decoder 14 through the switch 25. In a case of P picture or B picture, data output from the backward DCT circuit 23 and predictive image data output from the motion compensation portion 28 are added to each other by the addition circuit 24 so that the P picture or the B picture is reproduced, and data output from the addition circuit 24 is output as data output from the MPEG decoder 14 through the switch 25. The I picture or the P picture is stored in the frame memories 26 and 27 as necessary to be used when the motion motion compensation portion 28 produces predictive image data.

On the other hand, in the MPEG encoder 16, data output from the MPEG decoder 14 is input to the encoder's previous processing portion 30. The encoder's previous processing portion 30 rearranges pictures and forms data into macroblocks. The encoder's previous processing portion 30 rearranges the pictures in accordance with information of the picture type supplied from the splice controller 13.

Data output from the encoder's previous processing portion 30 is input to the subtraction circuit 31 and the switch 32. In a case of the I picture, the switch 32 selectively outputs data output from the encoder's previous processing portion 30. In a case of the P picture or the B picture, the subtraction circuit 31 subtracts predictive image data output from the motion compensation portion 41 from data output from the encoder's previous processing portion 30. Then, the switch 32 selectively outputs data from the subtraction circuit 31.

Data output from the switch 32 is subjected to DCT by the DCT circuit 33. Data output from the DCT circuit 33 is quantized by the quantizer circuit 34, and variable-length-encoded by the variable-length encoding circuit 35, and thus data is output as stream $ST_{RE}$.

In a case of the I picture, data output from the quantizer circuit 34 is inversely quantized by the backward quantization circuit 36, and then subjected to backward DCT by the backward DCT circuit 37, and then data output from the backward DCT circuit 37 is stored in the frame memory 39 or the frame memory 40. In a case of the P picture, data output from the quantizer circuit 34 is inversely quantized by the backward quantization circuit 36, and then subjected to backward DCT by the backward DCT circuit 37, and then the addition circuit 38 adds data output from the backward DCT circuit 37 and predictive image data output from the motion compensation portion 41 to each other so that a result of the addition is stored in the frame memory 39 or the frame memory 40. The I picture or the P picture stored in the frame memory 39 or the frame memory 40 is, as necessary, used when the motion compensation portion 41 produces predictive image data. The motion detection circuit 42 detects a motion vector in accordance with data stored in the frame memories 39 and 40 and data output from the encoder's previous processing portion 30 so as to output information of the motion vector.

The encode controller 43 receives encode information supplied from the splice controller 13 and a target amount of bits for each picture. In accordance with supplied information, the encode controller 43 controls the quantizer circuit 34, the backward quantization circuit 36, the frame memories 39 and 40 and the switch 44.

Specifically, when the encode controller 43 reuses the motion vector included in encode information supplied from the splice controller 13, the encode controller 43 causes information of the motion vector to be input to the motion compensation portion 41 through the switch 44. When the encode controller 43 does not reuse the motion vector included in encode information supplied from the splice controller 13, the encode controller 43 controls the switch 44 in such a manner that information of vector newly produced by the motion detection circuit 42 is supplied to the motion compensation portion 41. Moreover, the encode controller 43 controls the frame memories 39 and 40 in such a manner that the pictures required to produce predictive image data are stored in the frame memories 39 and 40 in accordance with the picture type included in encode information supplied from the splice controller 13.

Moreover, the encode controller 43 is structured to monitor an amount of bits generated by the variable-length encoding circuit 35 and control the variable-length encoding circuit 35. If an amount of generated codes is insufficiently large with respect to the determined target amount of bits and thus overflow of the VBV buffer is expected, the encode controller 43 adds dummy data, that is, performs stuffing in order to compensate an amount of shortage of the amount of generated codes with respect to the target amount of bits. When underflow of the VBV buffer is expected because the amount of generated codes is enlarged with respect to the determined target amount of target amount of bits, the encode controller 43 performs skipped macroblock process (ISO/IEC13818-2 7.6.6) which is a process for interrupting the encoding process in macroblock units.

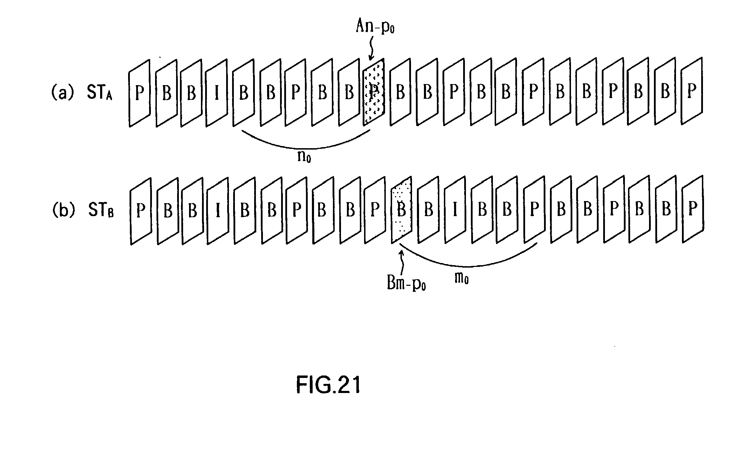

Referring to FIGS. 21 to 26, control of rearrangement of pictures and motion compensation control according to the present invention will now be described in detail.

FIG. 21 shows an example of a splicing point and re-encoding ranges for video data (hereinafter called "presentation video data") obtained by the decoding operations performed by the MPEG decoders 14A and 14B. FIG. 21 (a) shows presentation video data corresponding to the stream A ($ST_A$) and FIG. 21 (b) shows presentation video data corresponding to the stream B ($ST_B$). When the splicing point is determined, pictures are instructed on presentation video data. The instruction of the splicing point is performed with a parameter $p_0$. As predetermined ranges across the splicing point including the splicing point, re-encoding ranges are set. The re-encoding ranges are set with parameters $n_0$ and $m_0$.

In the following description, as shown in FIG. 21, when a picture at the splicing point in presentation video data corresponding to the stream $ST_A$ is expressed as $A_{n-P0}$ by using the parameter $p_0$, pictures in the future from the picture $A_{n-P0}$ at the splicing point can be expressed as $A_{(n-P0)+1}$, $A_{(n-P0)+2}$, $A_{(n-P0)+3}$, $A_{(n-P0)+4}$, ... Moreover, pictures more previous than the picture $A_{n-P0}$ at the splicing point can be expressed as $A_{(n-P0)-1}$, $A_{(n-P0)-2}$, $A_{(n-P0)-3}$, $A_{(n-P0)-4}$, ... Similarly, when a picture at the splicing point in presentation video data corresponding to the stream $ST_B$ is expressed as $B_{m-P0}$, pictures in the future from the picture $B_0$ at the splicing point can be expressed as $B_{(m-P0)+1}$, $B_{(m-P0)+2}$, $B_{(m-P0)+3}$, $B_{(m-P0)+4}$, ... Moreover, pictures more previous than the picture $B_0$ at the splicing point can be expressed as $B_{(m-P0)-1}$, $B_{(m-P0)-2}$, $B_{(m-P0)-3}$, $B_{(m-P0)-4}$, ...

The re-encoding range for presentation video data corresponding to the stream $ST_A$ includes $n_0$ pictures in front of the splicing point. The re-encoding range for presentation video data corresponding to the stream $ST_B$ includes $m_0$ pictures in the rear of the splicing point. Therefore, the re-encoding ranges include pictures from picture $A_{(n-P0)+n0}$

to picture $A_{n-p0}$ and pictures from picture $B_{m-P0}$ to picture $B_{(m-P0)-m0}$.

In this embodiment, the re-encoding process of each of the determined re-encoding ranges is performed. The re-encoding process is performed such that the supplied source encoding streams $ST_A$ and $ST_B$ are decoded to restore the same to base band video data, followed by splicing the two decoded video data items, and followed by re-encoding video data above. Thus, a new stream $ST_{RE}$ is produced.

The re-encoding process is able to overcome the problems of the rearrangement of pictures and motion compensation. The foregoing fact will now be described.

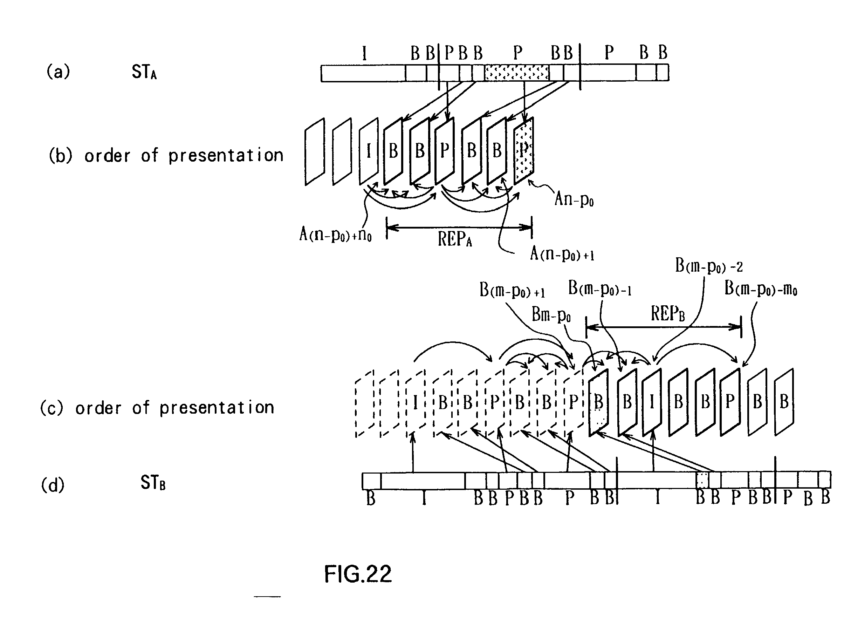

FIG. 22 shows arrangements of pictures realized before decoding and after decoding in the example shown in FIG. 21. In FIG. 22, (a) shows stream $ST_A$ adjacent to the re-encoding range, (b) shows presentation video data corresponding to the stream $ST_A$ adjacent to the re-encoding range, (c) shows presentation video data corresponding to the stream $ST_B$ adjacent to the re-encoding range and (d) shows the stream $ST_B$ adjacent to the re-encoding range. In the drawing, $REP_A$ represents a picture in presentation video data corresponding to the stream $ST_A$, $REP_A$ being required to be re-encoded, $REP_B$ represents a picture in presentation video data corresponding to the stream $ST_B$, the picture $REP_B$ being a picture is to be re-encoded. In the drawing, curve arrows indicate directions of prediction.

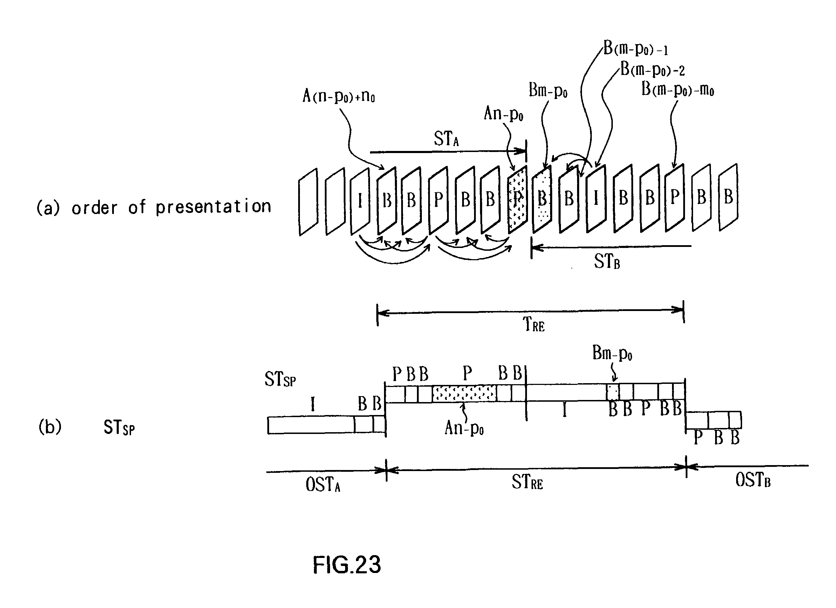

FIG. 23 shows states of the stream $ST_A$ and the stream $ST_B$ shown in FIGS. 21 and 22 and realized after the splicing process has been performed. FIG. 23 (a) shows presentation video data obtained by splicing two streams. FIG. 23 (b) shows a stream $ST_{SP}$ after splicing two streams. The stream $ST_{SP}$ shown in FIG. 23 (b) is formed in the re-encoding range such that a new stream $ST_{RE}$ is produced by re-encoding image data shown in FIG. 23 (a), followed by connecting, to one another, a stream $ST_A$ (hereinafter called $OST_A$) in front of the re-encoding range, the new stream $ST_{RE}$ in the re-encoding range and an original stream $ST_B$ hereinafter called $OST_B$) in the rear of the re-encoding range. Note that $T_{RE}$ represents a re-encoding period of time.

In the examples shown in FIGS. 21 to 23, the predictive encoding process using a picture belonging to a different stream in the vicinity of the splicing point is not performed. Therefore, no problem relating to the order of presentation arises.

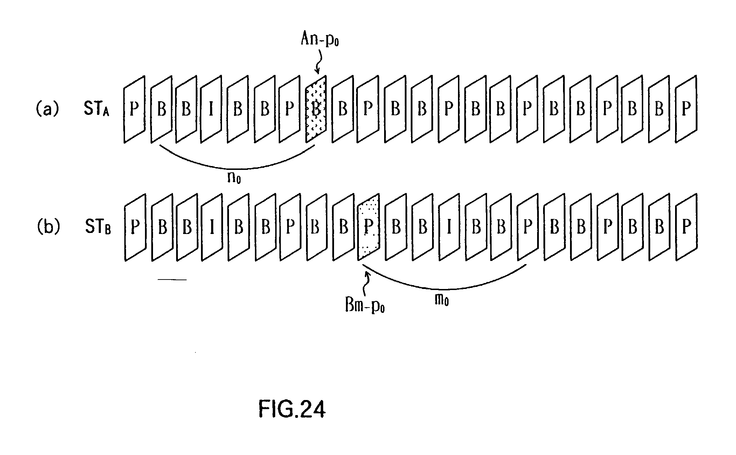

Another example which is different from the example shown in FIGS. 21 to 23 in the splicing point is shown in FIGS. 24 to 26.

FIG. 24 is an explanatory diagram showing another example of a splicing point and re-encoding ranges of presentation video data. In FIG.24, (a) shows presentation video data corresponding to the stream $ST_A$ and (b) shows presentation video corresponding to the stream $ST_B$.

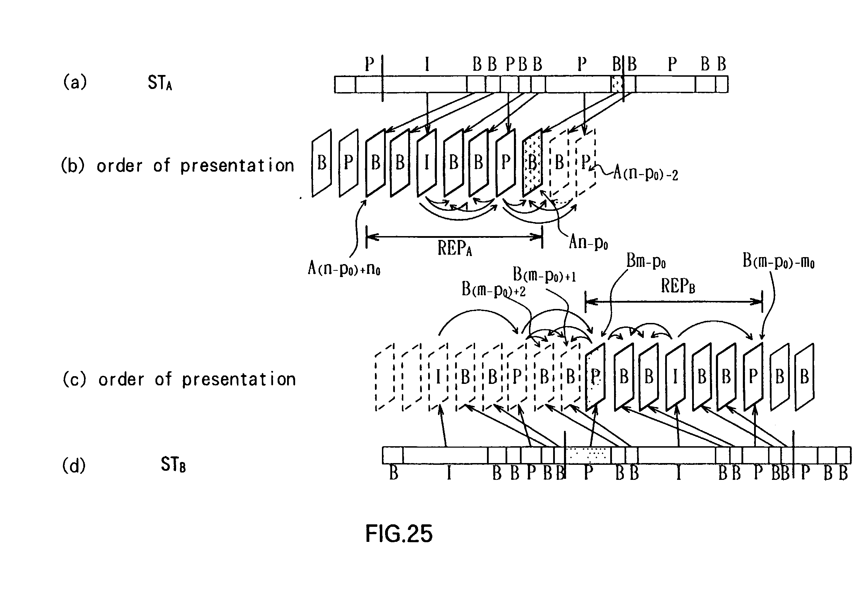

FIG. 25 shows arrangements of pictures realized before the decoding process and after the decoding process in the example shown in FIG. 24. In FIG. 25, (a) shows a stream $ST_A$ adjacent to the re-encoding range, (b) shows presentation video data corresponding to the stream $ST_A$ adjacent to the re-encoding range, (c) shows presentation video data corresponding to a stream $ST_B$ adjacent to the re-encoding range and (d) shows the stream $ST_B$ adjacent to the re-encoding range.

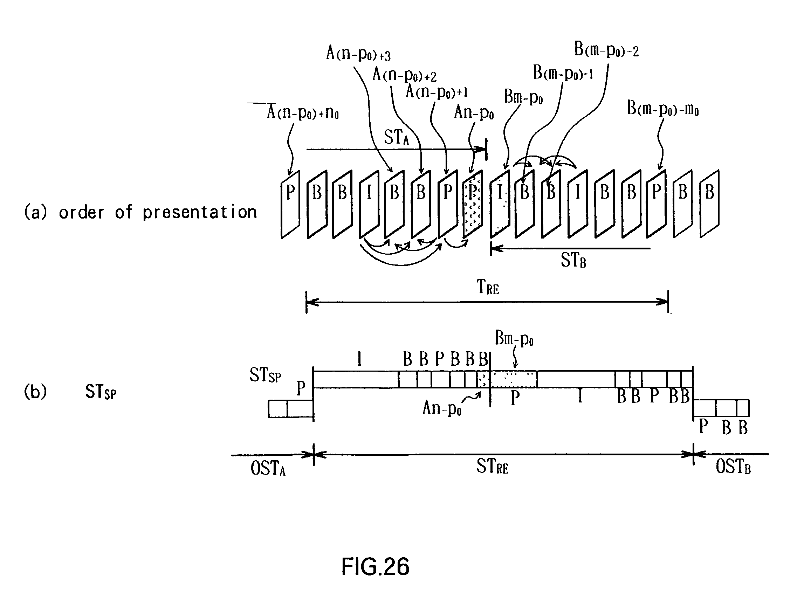

FIG. 26 shows arrangements of pictures realized before a splicing process and after the splicing process in the example shown in FIG. 24. In FIG. 26, (a) shows image data obtained by splicing presentation video data shown in FIG. 25 (b) and presentation video data shown in FIG. 25 (c), and (b) shows a spliced stream $ST_{SP}$. The stream $ST_{SP}$ shown in (b) is formed by producing a new original stream $ST_A$ ($OST_A$) by re-encoding image data shown in FIG. (a) in the re-encoding range and by connecting, to one another, an original stream $ST_A$ ($OST_A$) in front of the re-encoding range, the new stream $ST_{RE}$ in the re-encoding range and an original stream $ST_B$ ($OST_B$) in the rear of the re-encoding range.

In the example shown in FIGS. 23 to 26, the picture $B_{m-P0}$ at the splicing point is a P picture. Therefore, if reconstruction of the picture type is not performed when presentation video data shown in FIG. 25 (b) and presentation video data shown in FIG. 25 (c) are connected to each other, a predictive encoding process using the picture belonging to the different stream $ST_A$ is undesirably performed when the picture $B_{m-P0}$ is re-encoded. Therefore, image quality deteriorates. Hence, in this embodiment, the picture type is reconstructed in such a manner that execution of the predictive encoding process using a picture belonging to a different stream is prevented. FIG. 26 (a) shows a state realized after the picture $B_{m-P0}$ has been transformed from the P picture to the I picture as a result of the reconstruction of the picture type.

In the example shown in FIG. 26 (a), the picture $A_{n-P0}$ is a B picture. The picture $A_{n-P0}$ is originally a picture to be subjected to the bidirectional predictive encoding process. In this case, in re-encoding of the picture $A_{n-P0}$, a predictive encoding process using a picture belonging to the different stream $ST_B$ is undesirably performed. As a result, the image quality deteriorates. Therefore, in this embodiment, even a B picture is subjected to a predictive encoding process without prediction from a picture belonging to a different stream when the re-encoding process is performed. Therefore, in the example shown in FIG. 26 (a), the picture $A_{n-P0}$ is subjected to a predictive encoding process using only a P picture $(A_{(n-P0)+1})$ in front of the picture $A_{n-P0}$.

The setting the reconstruction of the picture type is performed by the splice controller 13 and information of setting of the reconstruction of the picture type is given to the encode controller 43 of the MPEG encoder 17. In accordance with the setting of the reconstruction of the picture type, the encode controller 43 performs an encoding process. Also reuse of encode information produced in a previous encoding process of the motion vector or the like is performed in accordance with setting of the reconstruction of the picture type.

The splicing process according to this embodiment is different from simple splicing which is performed on the streams. Therefore, as shown in the FIG. 25(d), the B pictures ($B_{(m-P0)+2}$ and $B_{(m-P0)+1}$) existing in the rear (past) of the picture $B_{m-P0}$ in the stream $ST_B$ are discarded after the decoding process has been performed as shown in FIG. 25(c). Thus, the B pictures do not exist in the picture string realized after the re-encoding process has been performed.

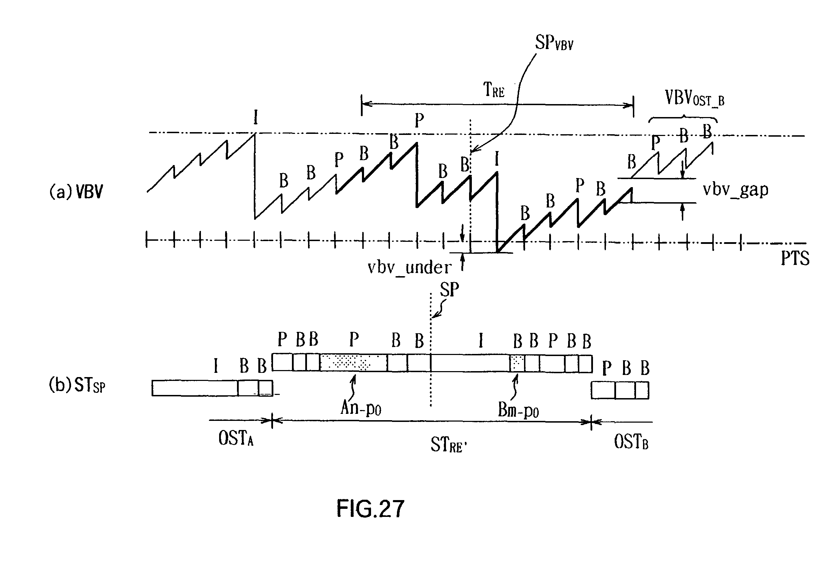

Referring to FIGS. 27 to 30, a method of calculating a new target amount of bits for image data in a re-encoding range according to this embodiment will now be described.

If two streams are simply spliced, the VBV buffer for the spliced streams encounters underflow or overflow in the rear of the splicing point. As an alternative to this, the locus of an amount of occupation of data in the VBV buffer for the spliced streams becomes discontinuous. A re-encoding process which is performed by the splicing device according to the present invention and which is arranged to overcome the foregoing problem will now be described with reference to FIGS. 27 to 30.

Initially, referring to FIG. 27, the problems of underflow of the VBV buffer for the spliced streams and discontinuation of the amount of occupation of data in the VBV buffer will now be described.

FIG. 27 shows an example corresponding to FIG. 23 described above and arranged to perform a simple splicing process. FIG. 27 (a) is a diagram showing a locus of an amount of occupation of data in the VBV buffer for the stream $ST_{RE}$' to be re-encoded. FIG. 27 (b) is a diagram showing the stream $ST_{RE}$' to be re-encoded. Referring to FIG. 27, $T_{RE}$ represents re-encode control time, $OST_A$ represents original stream A and $ST_{RE}$' represents a stream to be re-encoded. The stream $ST_{RE}$' to be re-encoded is different from the re-encoded stream $ST_{RE}$ which has actually been re-encoded and the stream $ST_{RE}$' is a stream estimated when the simple splicing process is performed. $OST_B$ represents original stream B, $SP_{VBV}$ represents a splicing point in the VBV buffer and SP represents a splicing point of the streams.

As shown in FIG. 27 (a), in the front of the splicing point SP, the locus of the VBV buffer for the stream $ST_{RE}$' to be subjected to the splicing process is a locus of an amount of occupation of data in the VBV buffer for the stream A ($ST_A$). In the rear of the splicing point SP, the locus is a locus of an amount of occupation of data in the VBV buffer for the stream B ($ST_B$). If the stream A and the stream B are simply splice, a level of the amount of occupation of data in the VBV buffer for the stream A ($ST_A$) at the splicing point and a level of the amount of occupation of data in the VBV buffer for the stream B ($ST_B$) at the splicing point are different from each other. Therefore, the locus of the amount of occupation of data in the VBV buffer becomes discontinuous.

To realize seamless splicing in which a locus of the amount of occupation of data in the VBV buffer for the stream A at the splicing point and a locus of the amount of occupation of data in the VBV buffer for the stream B at the splicing point are continued, a start level of an amount of occupation of data in the VBV buffer for the stream B at the splicing point must coincide with an end level of an amount of occupation of data in the VBV buffer for the stream A at the splicing point, as shown in FIG. 27 (a). That is, to make coincide the foregoing levels with each other, the level must be lowered in the case shown in FIG. 27 (a) as compared with a locus which is considered to be an original locus of the amount of occupation of data in the VBV buffer for the stream B. The original locus of the amount of occupation of data is a locus of an amount of occupation of data in the VBV buffer for the stream B on an assumption that the supplied stream B is not subjected to the splicing process. The foregoing locus is indicated with an extension locus of $VBV_{OST\_B}$ shown in FIG. 27 (a).

As a result, the VBV buffer underflows at fetching timing of the I picture at which a largest amount of bits is fetched from the VBV buffer, as shown in FIG. 27 (a).

In this embodiment, as shown in FIG. 27 (a), the locus of the amount of occupation of data in the VBV buffer is made to be continued at the splicing point and occurrence of underflow in the rear of the splicing point is prevented by setting a new target amount of bits for each picture in the re-encoding period.

If the locus of the amount of occupation of data in the VBV buffer for the stream B is simply lowered in order to make the locus of the amount of occupation of data in the VBV buffer for the spliced stream to be continued at the splicing point, underflow occurs. What is worse, the locus of the amount of occupation of data in the VBV buffer becomes discontinuous at a point at which switching between the stream $ST_{RE}$' to be re-encoded and the original stream $OST_B$ is performed.

In this embodiment, as shown in FIG. 27 (a), the locus of the amount of occupation of data in the VBV buffer is made to be continued at the point at which switching between the stream $ST_{RE}$' to be re-encoded and the original stream $OST_B$ is performed by setting a new target amount of bits for each picture in the re-encoding period. The reason why the locus $VBV_{OST-B}$ of the amount of occupation of data in the VBV buffer corresponding to the original stream $OST_B$ is not controlled is that the locus $VBV_{OST-B}$ cannot be controlled because the foregoing locus is an original locus of the amount of occupation of data in the VBV buffer for the stream B. The reason for this will now be considered. The locus $VBV_{OST\_B}$ is an optimum locus determined in such a manner that overflow or underflow of the original stream $OST_B$ is prevented. If the level of the optimum locus is controlled, there is a possibility that overflow or underflow occurs.

The problem of overflow of the VBV buffer for the spliced streams will now be described with reference to FIG.

29 similarly to the problem of the underflow of the VBV.

FIG. 29 shows an example in which a splicing process corresponding to FIG. 26 has been performed, FIG. 29 (a) is a diagram showing a locus of an amount of occupation of data in the VBV buffer for a splicing stream $ST_{SP}$ and FIG. 29 (b) is a diagram showing the splicing stream $ST_{SP}$. Referring to FIG. 29, $T_{RE}$ represents splicing period in which splicing control is performed, $OST_A$ represents original stream A, $ST_{RE}$ represents a stream to be re-encoded, $OST_B$ represents original stream B, $SP_{VBV}$ represents splicing point in the VBV buffer and SP represents the splicing point.

As shown in FIG. 29 (a), a locus of the VBV buffer for the spliced stream $ST_{RE}'$ to be re-encoded is a locus of an amount of occupation of data in the VBV buffer for the stream A ($ST_A$) at a position in front of the splicing point SP and at a position in the rear of the splicing point SP, the locus is a locus of the amount of occupation of data in the VBV buffer for the stream B ($ST_B$). If the stream A and the stream B are simply spliced, the level of the amount of occupation of data in the VBV buffer for the stream A ($ST_A$) at the splicing point and the level amount of occupation of data in the VBV buffer for the stream B ($ST_B$) at the splicing point in the VBV buffer are different from each other. Therefore, the locus of amount of occupation of data in the VBV buffer becomes discontinuous.

To realize seamless splicing in which a locus of the amount of occupation of data in the VBV buffer for the stream A at the splicing point and a locus of the amount of occupation of data in the VBV buffer for the stream B at the splicing point are continued, a start level of an amount of occupation of data in the VBV buffer for the stream B at the splicing point must coincide with an end level of an amount of occupation of data of the stream A at the splicing point in the VBV buffer, as shown in FIG. 29 (a). That is, to make coincide the foregoing levels with each other, the level must be higher in the case shown in FIG. 29 (a) as compared with a locus which is considered to be an original locus of the amount of occupation of data in the VBV buffer for the stream B. The original locus of the amount of occupation of data is a locus of an amount of occupation of data in the VBV buffer for the stream B on an assumption that the supplied stream B is not subjected to the splicing process. The foregoing locus is indicated with an extension locus of $VBV_{OST\_B}$ shown in FIG. 29 (a).

As a result, the VBV buffer encounters overflow after some B pictures and P pictures in which the amount of bits of each to be fetched from the VBV buffer is small, have been successively fetched from the VBV buffer.

In this embodiment, as shown in FIG. 29 (a), the locus of the amount of occupation of data in the VBV buffer is made to be continued at the splicing point, and moreover, occurrence of overflow in the rear of the splicing point is prevented by setting a new target amount of bits for each picture in the re-encoding period.

If the locus of the amount of occupation of data in the VBV buffer for the stream B is simply lowered in order to make the locus of the amount of occupation of data in the VBV buffer for the spliced stream to be continued at the splicing point, overflow occurs. What is worse, the locus of the amount of occupation of data in the VBV buffer becomes discontinuous at a point at which switching between the stream $ST_{RE}'$ to be re-encoded and the original stream $OST_B$ is performed.

In this embodiment, as shown in FIG. 29 (a), the locus of the amount of occupation of data in the VBV buffer is made to be continued at the point at which switching between the stream $ST_{RE}'$ to be re-encoded and the original stream $OST_B$ is performed by setting a new target amount of bits for each picture in the re-encoding period. The reason why the locus $VBV_{OST-B}$ of the amount of occupation of data in the VBV buffer corresponding to the original stream $OST_B$ is not controlled is that the locus $VBV_{OST\_B}$ cannot be controlled because the foregoing locus is an original locus of the amount of occupation of data of the stream B in the VBV buffer. The reason for this will now be considered. The locus $VBV_{OST\_B}$ is an optimum locus determined in such a manner that overflow or underflow of the original stream $OST_B$ is prevented. If the level of the optimum locus is controlled, there is a possibility that overflow or underflow occurs.

A splice control method according the present invention for preventing underflow or overflow of the VBV buffer and a splice control method according to the present invention for preventing discontinuation of the amount of occupation of data in the VBV buffer will now be described.

Referring to FIGS. 27 to 30, vbv_under represents an amount of underflow of the VBV buffer, vbv_over represents an amount of overflow of the VBV buffer and vbv_gap represents data indicating a gap value of the VBV buffer at a switching point between the stream $ST_{RE}'$ to be re-encoded and the original stream $OST_B$.

Initially, in accordance with a bit count value of the stream A and a bit count value of the stream B supplied from the stream counter 11, the splice controller 13 calculates a locus of an amount of occupation of data in the VBV buffer for the original stream $OST_A$, a locus of an amount of occupation of data in the VBV buffer for the original stream $OST_B$ and a locus of an amount of occupation of data in the VBV buffer for the stream $ST_{RE}'$, to be re-encoded, in a case where the stream A and the stream B are simply spliced. The locus of the amount of occupation of data in each VBV buffer can easily be calculated by subtracting an amount of bits output from the VBV buffer corresponding to the presentation times from the bit count value supplied from the stream counter 11 at each presentation time. Therefore, the splice controller 13 is able to virtually recognize the locus of the amount of occupation of data in the VBV buffer for the original stream $OST_A$, the locus of the amount of occupation of data in the VBV buffer for the original stream $OST_B$ and the locus of the amount of occupation of data in the VBV buffer for the stream $ST_{RE}'$ to be re-encoded, in a case where the stream A and the stream B are simply spliced.

Then, the splice controller 13 makes a reference to the locus of the amount of occupation of data of the stream $ST_{RE}'$, which has virtually been obtained and is to be re-encoded, to calculate an amount of underflow (vbv_under) of the stream $ST_{RE}'$ to be re-encoded, or an amount of overflow (vbv_over). Moreover, the splice controller 13 makes a reference to the locus of the amount of occupation of data of the stream $ST_{RE}'$, which has virtually been obtained and which is to be re-encoded, and the locus ($VBV_{OST\_B}$) of the amount of occupation of data of the original stream $OST_B$ in the VBV buffer. Thus, the splice controller 13 calculates a gap value (vbv_gap) in the VBV buffer at the switching point between the stream $ST_{RE}'$ to be re-encoded and the original stream $OST_B$.

Then, the splice controller 13 calculates an offset amount vbv_off of a target amount of bits in accordance with the following Equations (1) and (2):

$$\text{vbv\_off} = - \, (\text{vbv\_under} - \text{vbv\_gap}) \qquad\qquad (1)$$

$$\text{vbv\_off} = + \, (\text{vbv\_over} - \text{vbv\_gap}) \qquad\qquad (2)$$

If the VBV buffer underflows as in the case shown in FIG. 27 (a), Equation (1) is used to calculate the offset amount vbv_off. If the VBV buffer overflows as in the case shown in FIG. 29 (a), Equation (2) is used to calculate the offset amount vbv_off.

Then, the splice controller 13 uses the offset amount vbv_off obtained in accordance with Equation (1) or (2) to calculate a target amount of bits (a target amount of bits) $TB_{P0}$ in accordance with the following Equation (3):

$$TB_{P0} = \sum_{i=0}^{no} GB\_A_{(n-P0)+i} + \sum_{i=0}^{mo} GB\_B_{(m-P0)-i} + \text{vbv\_off} \qquad\qquad (3)$$

The target amount of bits $TB_{P0}$ is a value indicating a target amount of bits which is assigned to the picture which is subjected to the re-encoding process. In Equation (3), GB_A is a value indicating an amount of generated bits of a picture which is any one of pictures $A_{n-P0}$ to $A_{(n-P0)+no}$ in the stream A and $\sum GB\_A_{(n-P0)+i}$ is a sum of amounts of generated bits of the pictures $A_{n-P0}$ to $A_{(n-P0)+no}$. Similarly, in Equation (3), GB_B is a value indicating an amount of generated bits of a picture which is any one of pictures $B_{m-P0}$ to $B_{(m-P0)-mo}$ in the stream B and $\sum GB\_B_{(m-P0)+i}$ is a sum of amounts of generated bits of the pictures $B_{m-P0}$ to $B_{(m-P0)-mo}$.

That is, the target amount of bits $TB_{P0}$ expressed by Equation (3) is a value obtained by adding the offset amount vbv_off of VBV to the total amount of generated bits of the pictures $A_{(n-P0)+no}$ to $B_{(m-P0)-mo}$. The offset amount vbv_off is added to correct the target amount of bits $TB_{P0}$ so that the gap of the locus of the amount of occupation of data at the switching point between the stream $ST_{SP}$, to be re-encoded, and the original stream $OST_B$ is made to be zero. Therefore, seamless splicing can be realized.

Then, the splice controller 13 assigns the target amount of bits $TB_{P0}$ obtained in accordance with Equation (3) to the pictures $A_{(n-P0)+no}$ to $B_{(m-P0)-mo}$. Usually, the quantizer characteristic of each picture is determined in such a manner that the target amount of bits $TB_{P0}$ is distributed at ratios that I picture : P picture: B picture = 4:2:1.

However, the splicing device according to the present invention does not use the quantizer characteristic such that the target amount of bits $TB_{P0}$ is simply distributed to the I picture, the P picture and the B picture at fixed ratios as 4:2:1. The splicing device according to the present invention makes a reference to the quantizer characteristics including the previous quantizer steps and the quantizer matrices of the pictures $A_{(n-P0)+no}$ to $B_{(m-P0)-mo}$ so as to determine a new quantizer characteristic. Specifically, the encode controller 43 makes a reference to the quantizer steps and the quantizer matrices included in the stream A and the stream B. To prevent excessive difference from the quantizer characteristic realized in the previous encode processes performed by the encoders 1A and 1B, the encode controller 43 determines the quantizer characteristic when the re-encoding process is performed. No reference is made to information of the quantizer steps and the quantizer matrices of the picture, the picture type of which has been changed because of the reconstruction of the picture, and, a new quantizer characteristic is calculated when the re-encoding process is performed.

FIG. 28 is a diagram showing an amount of occupation of data in the VBV buffer when a re-encoding process has been performed by using the target amount of bits $TB_{P0}$ calculated by the splice controller 13 in order to resolve the problem of the underflow of the VBV buffer described with reference to FIG. 27. FIG. 30 is a diagram showing an amount of occupation of data in the VBV buffer when a re-encoding process has been performed by using the target amount of bits $TB_{P0}$ calculated by the splice controller 13 in order to resolve the problem of the overflow of the VBV buffer described with reference to FIG. 29.

Therefore, the re-encoded stream $ST_{RE}$ subjected to the re-encoding process is shown in FIGS. 28 and 30. The locus of the amount of occupation of data in the VBV buffer for the stream $ST_{RE}'$ to be re-encoded shown in FIG. 27 (a) and the locus of the amount of occupation of data in the VBV buffer for the re-encoded stream $ST_{RE}$ shown in FIG. 28 (a) are similar loci. The locus of the amount of occupation of data in the VBV buffer for the stream $ST_{RE}'$ to be re-encoded shown in FIG. 29 (a) and the locus of the amount of occupation of data in the VBV buffer for the re-encoded stream $ST_{RE}$ shown in FIG. 30 (a) are similar loci.

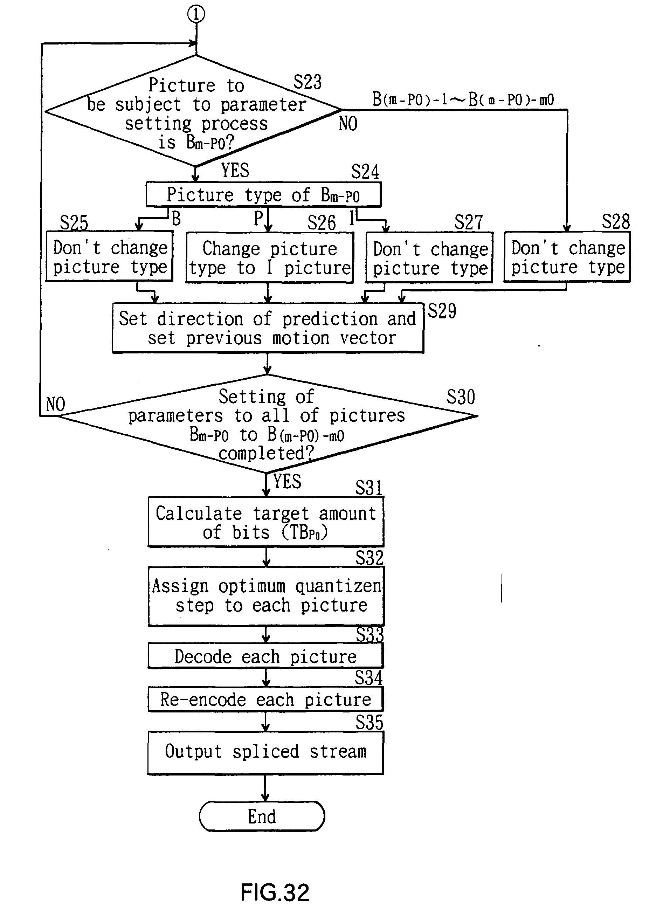

The operations of the splicing device and the editing device according to this embodiment will now be described with reference to FIGS. 31 and 32. The embodiment meets regulations of AnnexC of ISO13818-2 and ISO11172-2 and AnnexL of ISO13818-1.

In step S10, the splice controller 13 receives splicing point $p_0$ for splicing the streams $ST_A$ and $ST_B$ at an arbitrary picture position and re-encoding ranges $n_0$ and $m_0$ in the splicing process. In actual, an operator inputs the foregoing parameters from outside of the device. The re-encoding ranges $n_0$ and $m_0$ may automatically be set in accordance with the configuration of the GOP of the stream or the like. An example will now be described in which stream $ST_A$ is switched to stream $ST_B$ at the splicing point. As a matter of course, a backward process may be performed.

In step S11, the splice controller 13 controls an operation for writing data on the buffer memory 10 in such a manner that the stream $ST_A$ and the stream $ST_B$ are temporarily stored in the buffer memory 10. To cause the phases of the splicing point of each of the stream $ST_A$ and the stream $ST_B$ to be in synchronization with each other with reference to the presentation time, an operation of reading data from the buffer memory 10 is controlled.

In step S12, the splice controller 13 selects a picture in the stream $ST_A$ so as to prevent outputting a picture in the future from a picture $A_{n-P0}$ at the splicing point set to the stream $ST_A$. Moreover, the splice controller 13 selects a picture in the stream $ST_B$ so as to prevent an output of picture more previous than a picture $B_{m-P0}$ at the splicing point set to the stream $ST_B$. In an example shown in FIGS. 25 (a) and 25(b), a P picture which is a pictureO $A_{(n-P0)-2}$, is, on the stream $ST_A$, more previous than the picture $A_{n-P0}$ at the splicing point. In an order of presentation, the foregoing picture is a picture in the future as compared with the picture $A_{n-P0}$. Therefore, an output of the P picture, which is the picture $A_{(n-P0)-2}$, is not output. In an example shown in FIGS. 25 (c) and (d), the B pictures, which are $B_{(m-P0)+2}$ and $B_{(m-P0)+1}$, are pictures in the future of the picture $B_{m-P0}$ at the splicing point. In an order of presentation, the foregoing picture is a picture more previous than the picture $B_{m-P0}$. Therefore, the B pictures, which are the pictures $B_{(m-P0)+2}$ and $B_{(m-P0)+1}$, are not output. Pictures omitted from the selection in the foregoing step because the splice controller 13 has controlled the decoders 14A and 14B are not supplied to the encoder 16.

As described above, pictures to be transmitted are selected with reference to the order of the presentation. Therefore, even if the splicing process is performed, the problem of the presentation order as described with reference to FIG. 9 can be prevented.

In step S13, the splice controller 13 starts a process for setting the encoding parameters required to reconstruct the pictures when the re-encoding process is performed. The processes for reconstructing the pictures are processes in the following step S14 to step S30. The parameters which are set in the foregoing processes include the picture type, a direction of prediction and the motion vector and the like.

In step S14, the splice controller 13 determines whether or not the picture to be subjected to the picture reconstruction process is the picture $A_{n-P0}$ at the splicing point. If the picture to be subjected to the picture reconstruction process is the picture $A_{n-P0}$ at the splicing point, the operation proceeds to step S15. If a negative determination is made, that is, if the picture to be subjected to the picture reconstruction is any one of pictures $1_{(n-P0)+n0}$ to picture $A_{(n-P0)+1}$, the operation proceeds to step S20.

In step S15, the splice controller 13 determines whether the picture to be subjected to the picture reconstruction is a B picture, a P picture or an I picture. If the picture to be subjected to the picture reconstruction is a B picture, the operation proceeds to step S17. If the picture to be subjected to the picture reconstruction is a P picture or an I picture, the operation proceeds to step S18.

In step S16, the splice controller 13 determines whether or not two or more B pictures exist in front of the picture $A_{n-P0}$ in the spliced stream $ST_{SP}$. For example, as shown is FIG. 26(b), if two B pictures (a picture $A_{(n-P0)+2}$ and a picture $A_{(n-P0)+3}$) exit in front of the picture $A_{n-P0}$, the operation proceeds to step S18. If a negative determination is made, the operation proceeds to step S17.

In step S17, the splice controller 13 determines that the change of the picture type of the picture $A_{n-P0}$ is needless. Then, the splice controller 13 sets a picture type for use in the process for re-encoding the picture $A_{n-P0}$ such that the same picture type as the picture type (the B picture) set when a previous encode process has been performed by the encoder 1A is set. Therefore, in a re-encoding process to be described later, the picture $A_{n-P0}$ is re-encoded as the B picture.

In step S18, the splice controller 13 changes the picture type of the picture $A_{n-P0}$ from the B picture to the P picture. The reason why the picture is changed will now be described. A fact that the operation proceeds to step S18 means existence of two B pictures (the picture $A_{(n \cdot P0)+2}$ and the picture $A_{(n-P0)+3}$) in front of the B picture (picture $A_{n-P0}$). That is, three B pictures are arranged in the stream $ST_{RE}'$ to be re-encoded. Since a usual MPEG decoder has only two frame memories for temporarily storing predicted pictures, a final B picture cannot be decoded when three B pictures are successively arranged on a stream. Therefore, the picture type of the picture $A_{n-P0}$ is changed from the B picture to the P picture as described with reference to FIG. 26. Thus, the picture $A_{n \cdot P0}$ can reliably be decoded.

In step S19, the splice controller 13 determines that the change in the picture type of the picture $A_{n-P0}$ is needless. Therefore, the splice controller 13 sets the picture type for use when the picture $A_{n-P0}$ is re-encoded such that the same picture type as the picture type (the I picture or the P picture) set when a previous encode process has been performed by the encoder 1A is set.

In step S20, the splice controller 13 determines that the change in the picture type of the picture $A_{n-P0}$ is needless. Therefore, the splice controller 13 sets the picture type for use when the picture $A_{n-P0}$ is re-encoded such that the same picture type as the picture type (the I picture, the P picture or the B picture) set when a previous encode process has been performed by the encoder 1A is set.

In step S21, the splice controller 13 sets a direction of prediction and a motion vector for each picture. As shown in examples shown in FIGS. 25 and 26, when the picture $A_{n-P0}$ to be subjected to the picture reconstruction process is a B picture in the original stream $OST_A$, the picture $A_{n-P0}$ to be subjected to the picture reconstruction process is a picture which has been bidirectionally predicted from both of the P picture $A_{(n-P0)+1}$ and the P picture $A_{(n-P0)-2}'$ That is, in the previous encode process performed by the encoder 1A, the picture $A_{n-P0}$ is a picture which has been bidirectionally predicted from both of the P picture $A_{(n-P0)+1}$ and the P picture $A_{(n-P0)-2}'$ As described in step S12, the P picture $A_{(n-P0)-2}$ is not output as the splicing stream. Therefore, the P picture $A_{(n-P0)-2}$ can not be instructed as an inversely predicted picture of the picture $A_{n-P0}$ to be specified to the picture reconstruction process.

Therefore, the picture $A_{n-P0}$ (a B picture) set such that change in its picture type is needless in step S17 must be subjected to a forward and one-side prediction in which only the P picture of $A_{(n-P0)+1}$ is predicted. Therefore, in the foregoing case, the splice controller 13 sets the forward and one-side prediction for the picture $A_{n-P0}$ in which only the P picture of $A_{(n-P0)+1}$ is predicted. Also one-side prediction parameter for predicting only the P picture of $A_{(n-P0)+1}$ is predicted is set to the picture $A_{n-P0}$ changed from the B picture to the P picture in step S18.

The direction of prediction for the picture $A_{n-P0}$ (a P picture) set such that change in its picture type is needless in step S19 is not changed. That is, in the foregoing case, the splice controller 13 sets a forward and one-side prediction for the picture $A_{n-P0}$ such that only the same picture as the picture predicted in a previous encode process performed by the encoder 1A is predicted.

Change in the direction of prediction of the pictures $A_{(n-P0)+n0}$ to $A_{(n-P0)+1}$ set such that change in their picture types is needless in step S20 is needless. That is, in the foregoing case, the splice controller 13 sets a direction of prediction for the pictures $A_{(n-P0)+n0}$ to $A_{(n-P0)+1}$ in such a manner that the same picture as the picture predicted in a previous encode process performed by the encoder 1A is predicted. If the two pictures $A_{(n-P0)+1}$ and $A_{n-P0}$ are B pictures predicted from two directions from the forward-directional P picture or I picture and the backward-directional I picture or the P picture, the prediction for the picture $A_{(n-p0)+1}$ as well as the picture $A_{n-P0}$ must be changed to one-side prediction such that prediction is performed from only the forward-directional picture.

Further, in step S21, the splice controller 13 determines whether or not the motion vector set to each picture in the previous encode process performed by the encoder 1A is reused when the re-encoding process is performed in accordance with the newly set direction of prediction.

As described above, the motion vector used in a previous encode process performed by the encoder 1A is as it is, in the re-encoding process, employed for the P picture and the B picture, the direction of prediction of each of which has not been changed. In the examples shown in FIGS. 23 and 26, the motion vector used in the previous encode process performed by the encoder 1A is reused when the picture $A_{(n-P0)+n0}$ to picture $A_{(n-P0)+1}$ are re-encoded.

When the picture $A_{(n-P0)+1}$ and the picture $A_{n-P0}$ are B pictures predicted from both directions from a P picture or an I picture in the forward direction and an I picture or a P picture in the backward direction, the prediction has been changed to the one-side prediction in which prediction is performed from only a forward-directional picture. Therefore, only a motion vector corresponding to the forward-directional picture must be used. That is, when the picture $A_{(n-P0)+1}$ and the picture $A_{n-P0}$ are B pictures, the splice controller 13 performs setting such that the motion vector for the' forward-directional picture is used and the backward-directional motion vector is not used in step 521.

If the picture $A_{n-P0}$ is a picture predicted from one side which is the backward direction from only a picture $A_{(n-P0)-2}$ which is a future picture in a previous encode process performed by the encoder 1A, the re-encoding process is performed such that the motion vector produced in the previous encode process performed by the encoder 1A is not used. In this case, a new motion vector corresponding to $A_{(n-p0)+1}$ is produced. That is, the splice controller 13 performs setting in step S21 such that any previous motion vector is not used.

In step S22, the splice controller 13 determines whether or not parameters of the picture type, the direction of prediction and previous motion vectors of all of pictures from the picture $A_{(n-P0)+n0}$ to the picture $A_{n-P0}$ have been set.

In step S23, the splice controller 13 determines whether or not the picture to be subjected to the picture reconstruction process is a picture $B_{m-P0}$ at the splicing point. If the picture to be subjected to the picture reconstruction process the picture $B_{m-P0}$ at the splicing point, the operation proceeds to step S24. If a negative determination is made, that is, if the picture to be subjected to the picture reconstruction is any one of pictures $B_{(m-P0)-1}$ to $B_{(m-P0)+m0}$, the operation proceeds to step S28.

In step S24, the splice controller 13 determines whether the picture to be subjected to the picture reconstruction process is a B picture, a P picture or an I picture. If the picture to be subjected to the picture reconstruction process is a B picture, the operation proceeds to step S25. If the picture to be subjected to the picture reconstruction process is a P picture, the operation proceeds to step S26. If the picture to be subjected to the picture reconstruction process is an I picture, the operation proceeds to step S27.

In step S25, the splice controller 13 determines that change in the picture type of the picture $B_{m-P0}$ in the re-encoding process is needless as in the example shown in FIGS. 22 and 23. Thus, the splice controller 13 sets the picture type for use in a re-encoding process of the $B_{m-P0}$ such that the same picture type as the picture type (the B picture) set in the previous encode process performed by the encoder 1B is set.

In step S26, the splice controller 13 changes the picture type of the picture $B_{m-P0}$ from the P picture to the I picture as in the example shown in FIGS. 25 and 26. The reason why the picture type is changed as described above will now be described. Since the P picture is a one-side prediction P picture which is predicted from the forward-directional I picture or the P picture, the P picture is a picture which is always positioned in the rear of pictures used for prediction on the stream. If the first picture $B_{m-P0}$ at the splicing point in the stream $ST_B$ is a P picture, prediction must be performed from a forward-directional picture of the stream $ST_A$ which exists in front of the picture $B_{m-P0}$. Since the stream $ST_A$ and the stream $ST_B$ are completely different from each other, it is apparent that the quality of the image obtained by a decoding process deteriorates considerably if the picture type of the first picture $B_{m-P0}$ is set to the P picture.

If the picture type of the first picture $B_{m-P0}$ at the splicing point in the stream $ST_B$ is the P picture, the splice controller 13 changes the picture type of the picture $B_{m-P0}$ to the I picture.

In step S27, the splice controller 13 determines that change in the picture type of the picture $B_{m-P0}$ is needless. Thus, the splice controller 13 sets the picture for use in the re-encoding process of the picture $B_{m-P0}$ such that the same picture type as the picture type (the I picture) set in the previous encode process performed by the encoder 1B is set.

In step S28, the splice controller 13 determines that change in the picture type of each of the picture $B_{(m-P0)-1}$ to the picture $B_{(m-P0)-m0}$ is needless. The splice controller 13 sets the picture for use in the re-encoding process of each of the foregoing pictures such that the same picture type as the picture (the I picture, the P picture or the B picture) set in the previous encode process performed by the encoder 1B is set.

In step S29, the splice controller 13 sets a direction of prediction and a motion vector for each picture. If the picture $B_{m-P0}$ to be subjected to the picture reconstruction process is, in the original stream $OST_B$, a B picture as in the example shown in FIGS. 22 and 23, the picture $B_{m-P0}$ to be subjected to the picture reconstruction process is a picture predicted from two directions from the P picture $B_{(m-P0)+1}$ and the I picture $B_{(m-P0)-2}$. That is, in the previous encode process performed by the encoder 1B, the picture $B_{m-P0}$ is a picture produced by a bidirectional prediction from both of the P picture $B_{(m-P0)+1}$ and the I picture $B_{(m-P0)-2}$. As described in step S12, the P picture of $B_{(m-P0)+1}$ is not output as a splicing stream. Therefore, the P picture $B_{(m-P0)+1}$ cannot be specified as a forward-directional prediction picture for the picture $B_{m-P0}$ to be subjected to the picture reconstruction process.

Therefore, the picture $B_{m-P0}$ set such that change in its picture type is needless in step S25 must be set to perform a backward and one-side prediction such that only the I picture $B_{(m-P0)-2}$ is predicted. Therefore, the splice controller 13 sets a direction of prediction for the picture $B_{m-P0}$ to perform the backward and one-side prediction such that only the I picture $B_{(m-P0)-2}$ is predicted.

Change in the direction of prediction of the pictures $B_{(m-P0)+m0}$ to the picture $B_{(m-P0)+1}$ set such that change in their picture types is needless in step S28 is needless. In the foregoing case, the splice controller 13 sets a direction of prediction for the picture $B_{(m-P0)+m0}$ to the picture $B_{(m-P0)+1}$ such that the same picture as the picture predicted in a previous encode performed by the encoder 1B is predicted. If the picture $B_{(m-P0)-1}$ is a B picture, a direction of prediction for the $B_{(m-P0)-1}$ is set such that the backward and one-side prediction is performed so that only the I picture of $B_{(m-P0)-2}$ is predicted similar to the case in which the picture $B_{m-P0}$ is predicted.

Further, in accordance with the newly set direction of prediction, the splice controller 13 determines whether or not in step S29 that the motion vector set in a previous encode process performed by the encoder 1B is reused for each picture when the re-encoding process is performed.

As described above, the re-encoding process is performed such that the motion vectors used in a previous encode process performed by the encoder 1B are as it is used for the P pictures and the B pictures, the prediction direction of each of which has not been changed. For example, in FIGS. 22 and 23, the motion vectors used in a previous encode process are as it is used for the I picture $B_{(m-P0)-2}$ to the P picture $B_{(m-P0)-m0}$.

The direction of prediction for each of the picture $B_{m-P0}$ and picture $B_{(m-P0)-1}$ predicted from the two directions from both of the P picture $B_{(m-P0)+1}$ and the I picture of $B_{(m-P0)-2}$ in a previous encode process performed by the encoder 1B has been changed to the one-side prediction such that only the I picture $B_{(m-P0)-2}$ is predicted. Therefore, the motion vector corresponding to the picture $B_{(m-P0)+1}$ is not used and the motion vector corresponding to the picture $B_{(m-P0)-2}$ must be used for the picture $B_{m-P0}$. That is, in step S29, the splice controller 13 performs setting so as to reuse the previous motion vector in only one direction for the picture $B_{m-P0}$ and the picture $B_{(m-P0)-1}$. Moreover, the previous motion vector in another direction is not used.

Next, in step S30, the splice controller 13 determines whether or not the parameters relating to the picture type, the direction of prediction and the motion vector for all of the pictures from the picture $B_{m-P0}$ to the picture $B_{(m-P0)-m0}$ have been set.

In step S31, the splice controller 13 calculates a target amount of bits ($TB_{P0}$) to be generated in the re-encoding period in accordance with above-mentioned Equation (3). Specifically, the splice controller 13 initially calculates a locus of an amount of occupation of data in the VBV buffer for the original stream $OST_A$, a locus of an amount of occupation of data in the VBV buffer for the original stream $OST_B$ and a locus of an amount of occupation of data in the VBV buffer for the stream $ST_{RE}'$ to be encoded in a case where the stream A and the stream B are simply spliced in accordance with a bit count value of the stream A and the bit count value of the stream B supplied from the stream counter 11.

Then, the splice controller 13 analyzes the virtually-obtained locus of the amount of occupation of data in VBV buffer for the stream $ST_{RE}'$ to be re-encoded. Thus, the splice controller 13 calculates an amount of underflow (vbv_under) or an amount of overflow (vbv_over) of the stream $ST_{RE}'$ to be re-encoded. Moreover, the splice controller 13 compares the virtually-obtained locus of the amount of occupation of data in the VBV buffer for the stream $ST_{RE}'$ to be re-encoded and a locus ($VBV_{OST\_B}$) of the amount of occupation of data in the VBV buffer for the original stream $OST_B$. Thus, the splice controller 13 calculates a gap value (vbv_gap) of the VBV buffer at a switching point between the stream $ST_{RE}'$ to be re-encoded and the original stream $OST_B$.

Then, the splice controller 13 calculates an offset amount vbv_off of the target amount of bits in accordance with above-mentioned Equations (1) and (2). Then, the splice controller 13 uses the offset amount vbv_off calculated in accordance with Equation (1) or (2) to calculate a target amount of bits (target amount of bits) $TB_{P0}$ in accordance with above-mentioned Equation (3).

In step S32, the splice controller 13 determines a quantizer characteristic to be set to each picture, the quantizer characteristic being determined in accordance with an assignment, to the picture $A_{(n-P0)+n0}$ to the picture $B_{(m-P0)-m0}$, of the target amount of bits $TB_{P0}$ calculated in accordance with Equation (3). The splicing device according to the present invention makes a reference to quantizer characteristics including the previous quantizer steps and the quantizer matrices of each of the picture $A_{(n-P0)+n0}$ to the picture $B_{(m-P0)-m0}$ performed by the encoders 1A and 1B so as to determine new quantizer characteristics. Specifically, the splice controller 13 initially receives, from the stream analyzing portion 12, information about the encoding parameters produced in a previous encoding process performed by the encoders 1A and 1B and included in the streams A and B, information including quantizer steps and quantizer matrices.

Then, the splice controller 13 does not determine the quantizer characteristics in accordance with only the amounts of bits obtained such that the target amount of bits $TB_{P0}$ obtained in accordance with Equation (3) is assigned to the picture $A_{(n-P0)+n0}$ to the picture $B_{(m-P0)-m0}$. The splice controller 13 makes a reference to the amounts of bits assigned from the target amount of bits $TB_{P0}$ and information of the previous encoding parameters. The splice controller 13 determines the quantizer characteristics when the re-encoding process is performed so as to prevent excessive difference from the quantizer characteristics in the encoding processes performed by the encoders 1A and 1B. As described in steps S18 and S26, the quantizer characteristics of the pictures, the picture type of each of which has been changed by the picture reconstruction process, are newly calculated when the re-encoding process is performed without making a reference to information of the quantizer steps and the quantizer matrices.

In step S33, the splice controller 13 decodes the picture $A_{(n-P0)+n0}$ to the picture $B_{(m-P0)-m0}$ included in the re-encoding period.

In step S34, the splice controller 13 uses the quantizer characteristics set to the picture $A_{(n-P0)+n0}$ to the picture $B_{(m-P0)-m0}$ in step S32 to re-encode the picture $A_{(n-P0)+n0}$ to the picture $B_{(m-P0)-m0}$ while controlling the amount of generated bits.

If the splice controller 13 reuses the motion vector used in previous encode processes performed by the encoders 1A and 1B when the re-encoding operation is performed, the splice controller 13 supplies a control signal to the encode controller so as to be supplied to the motion compensation portion 41 through the switch 44. When the motion vectors used in previous encode processes performed by the encoders 1A and 1B are not used, the splice controller 13 controls the encode controller 43 in such a manner that the motion vector newly produced by the motion detection circuit 42 is supplied to the motion compensation portion 41 through the motion compensation portion 41. At this time, the encode controller 43 controls the frame memories 39 and 40 in accordance with information about the picture type supplied from the splice controller 13 in such a manner that the pictures required to produce predicted image data are stored in the frame memories 39 and 40. The encode controller 43 sets, to the quantizer circuit 34 and the backward quantization circuit 36, the quantizer characteristics in the re-encoding range supplied from the splice controller 13.

In step S35, the splice controller 13 controls the switch 17 to selectively output any one of the streams $ST_A$ and $ST_B$ output from the buffer memory 10 and a new stream $ST_{RE}$ in the re-encoding range output from the MPEG encoder 16. Thus, the splice controller 13 connects, to one another, the stream $ST_A$ in front of the re-encoding range, the new stream $ST_{RE}$ in the re-encoding range and the stream $ST_B$ in the rear of the re-encoding range so as to output a spliced stream $ST_{SP}$.

In this embodiment, the new stream $ST_{RE}$ in the re-encoding range obtained by the re-encoding process performed by the MPEG encoder 17 while performing rate control in accordance with the target amount of bits $TB_{P0}$ is, by the switch 17, inserted into the position of the picture $A_{(n-P0)+n0}$ to the picture $B_{(m-P0)-m0}$ in the original stream. Thus, seamless splice can be realized.

To prevent overflow and underflow of the spliced stream $ST_B$ in the VBV buffer when the stream $ST_B$ is spliced to the stream $ST_A$, the state of the VBV buffer for the stream $ST_B$ realized after the splicing process has been performed must coincide with the state before the splicing process. The foregoing coincidence is a condition for controlling the buffer in order to assure continuous picture presentation. In this embodiment, the foregoing condition is basically met by setting a new target amount of bits (the target amount of bits) as described above.

As described above, according to this embodiment, each stream in the re-encoding range including a splicing point of a plurality of streams is decoded. Obtained image data in the re-encoding range is re-encoded in accordance with a new target amount of bits so that a new stream in the re-encoding range is produced. Thus, an original stream and a new stream across the re-encoding range are connected to each other so as to be output. Therefore, breakdown of the VBV buffer in the decoding device (IRD) can be prevented and that of image can be prevented because of successive picture presentation across the splicing point. Then seamless splicing of a plurality of image materials is performed in arbitrary picture units on the stream.

In this embodiment, information which is used when the motion vector or the like is decoded is reused when the re-encoding process is performed. That is, in this embodiment, in a portion adjacent to the splicing point, information of motion detection, such as the motion vector detected when a previous encoding process has been performed is reused for pictures except for pictures, the motion detection of which is invalid. Therefore, the image quality does not deteriorate owning to the re-encoding process.

When the quantizer characteristics are determined when the re-encoding process is performed, a reference is made to information of the quantizer steps and quantizer matrices which are used when the decoding process is performed. Therefore, in this embodiment, it is possible to satisfactorily prevent deterioration in the image quality owning to repetition of decoding and re-encoding. Thus, the accuracy in the image reconstruction can be assured.

The compression-encoding process conforming to the MPEG standard inevitably encounters a reconstruction error which cannot be prevented by only reuse of information which is used when a decoding process is performed because of a calculation accuracy when orthogonal transformation is performed and non-linear calculations which are performed in a mismatch process (a process for introducing an error into a high frequency region in DCT coefficients). Therefore, an image cannot completely be reconstructed even if information which is used when the decoding process is performed is reused. To prevent deterioration in the image quality, decoding and re-encoding must be limited to pictures in a predetermined region including a splicing point and positioned in the vicinity of the splicing point. Therefore, in this embodiment, all of streams are not decoded and re-encoded and a re-encoding range is set so that decoding and re-encoding are performed in only the foregoing region. Also the foregoing structure is able to prevent deterioration in the image quality. The re-encoding range may arbitrarily be set such that the re-encoding range is automatically set in accordance with a degree of deterioration in the image quality, the length of each GOP and the structure of the GOP.

The present invention is not limited to the above-mentioned embodiment. For example, a method of calculating a new target amount of bits for the re-encoding range is not limited to the method using Equations (1) to (3), and may be set arbitrarily.

As described above, according to the splicing device and the editing method of the present invention, each encoded bit stream in a predetermined region including a splicing point of the plurality of encoded bit streams and positioned across the splicing point is decoded so as to output image data in the predetermined region. Image data in the predetermined region is encoded in accordance with a new target amount of bits. Thus, a new encoded bit stream in the predetermined region is output. The new encoded bit stream in the predetermined region is substituted for an original encoded bit stream in the predetermined region. Then, the original encoded bit stream and the new encoded bit stream across the predetermined region are connected to each other so as to be output. Therefore, an effect can be obtained in that a plurality of image materials can be connected in arbitrary picture units on the encoded bit stream without breakdown of the virtual buffer corresponding to the input buffer of the decoding device and breakdown of the images.

According to the splicing device and the editing device of the present invention, encoding is performed by using information included in an original encoded bit stream and arranged to be used when decoding is performed. Therefore, an effect can be obtained in that deterioration in the image quality in the vicinity of the connection point can be prevented.

According to the splicing device and the editing device of the present invention, when pictures are rearranged because the original encoded bit stream is encoded by the bi-directional predictive encoding method, encoding is performed by performing reconstruction of the picture type in such a manner that a predictive encoding process using a picture belonging to a different encoded bit stream is not performed. Therefore, an effect can be obtained in that breakdown of images can be prevented even if encoding is performed by the bi-directional predictive encoding method.

According to the splicing device and the editing device of the present invention, a new target amount of bits is set in such a manner that an amount of deviation of a locus of an amount of occupation of data across the connection point in the virtual buffer corresponding to the input buffer of the decoding device is reduced. Therefore, an effect can be obtained in that breakdown of the virtual buffer can furthermore reliably be prevented.

**Claims**

1. An editing device for editing two source encoded streams, comprising:

    editing point setting means for setting respective editing points for the two source encoded streams;
    decoding means (14A, 14B) for decoding the two source encoded streams adjacent to the editing point to produce decoded video data, respectively to output decoded video data;
    re-encoding means (16) for re-encoding the decoded video data to output a re-encoded stream $ST_{RE}$ compring a plurality of pictures $CA_{(n-P0)+n0}$ to $B_{(m-P0)-m0}$;
    edited-stream producing means (17) for producing an edited stream by switching the source encoded streams and the re-encoded stream to effect output; and
    edition control means (13) for controlling the re-encoding means and the edited-stream producing means; wherein

    the edition control means (13) calculates a target amount of bits for encoding the plurality of pictures in the re-encoded stream so as to prevent overflow and underflow of a virtual buffer corresponding to an input buffer of a decoding device for decoding the edited stream, by analysing an amount of occupation of data in the virtual buffer, by calculating a first locus of an amount of occupation of data in the virtual buffer for a first source encoded stream $OST_A$, a second locus of an amount of occupation of data in the virtual buffer for a second source encoded stream $OST_B$, and a third locus of an amount of data in the virtual buffer for an estimated re-encoded stream $ST_{RE}'$ encoded with a bit count value of the streams $OST_A$ and $OST_B$, determining from the third locus an offset amount dependent upon an amount the third locus under flows or overflows the virtual buffer, and an amount of any discontinuity with the second locus, and

    the re-encoding means (16) encodes the decoded video data to generate the re-encoded stream comprising the plurality of re-encoded pictures having a total amount of bits equal to the target amount of bits supplied from the edition control means, the target amount of bits being equal to the total number of bits of the estimated re-encoded stream $ST_{RE}'$ corrected by the offset amount.

2. An editing device according to claim 1, wherein the virtual buffer is a VBV buffer which is a video buffer verifier and the editing device is for editing two source MPEG-encoded streams.

3. An editing device according to claim 1 wherein
    the edition control means calculates the target amount of bits in the re-encoding process which is performed by the re-encoding means so as to prevent discontinuation of a locus of amount of occupation of data in the virtual buffer at a switching point between the source encoded streams and the re-encoded stream or at the editing point of the re-encoded stream.

4. An editing device according to claim 1 wherein the edition control means controls the re-encoding means so as to approximate the locus of the amount of occupation of data in the virtual buffer corresponding to the re-encoded stream $ST_{RE}$ to a locus of an amount of occupation of data in the virtual buffer which is assumed to be an original locus of the source encoded streams.

5. An editing device according to claim 1 wherein the edition control means fetches encoding parameters included in the source encoded streams and selectively reuses the fetched encoding parameters when the re-encoding process is performed in the re-encoding means so as to prevent deterioration in image quality of the edited stream.

6. An editing device according to claim 1 wherein the edition control means fetches information about quantizer characteristic included in the source encoded streams and controls the re-encoding means to cause the re-encoding means to perform the re-encoding process in accordance with the fetched quantizer characteristic.

7. An editing device according to claim 1 wherein the edition control means fetches, for each picture, information about quantizer characteristic included in the source encoded streams,
calculates a new quantizer characteristic in accordance with the quantizer characteristic fetched from the source encoded streams and the calculated target amount of bits, and
controls the re-encoding means to cause the re-encoding means to perform the re-encoding process in accordance with the calculated new quantizer characteristic.

8. An editing device according to claim 1 wherein the edition control means assigns the target amount of bits to each picture to be re-encoded by making a reference to a quantizer characteristic produced in a previous encoding process and included in the source encoded streams, and
controls the re-encoding means to cause the re-encoding means to perform the re-encoding process for each picture in accordance with the target amount of bits assigned to each picture.

9. An editing device according to claim 1 wherein the edition control means assigns the target amount of bits to each picture to be re-encoded so as to approximate the target amount of bits to an amount of generated bits for each picture in a previous encoding process of the source encoded stream, and
controls the re-encoding means to cause the re-encoding means to perform the re-encoding process for each picture in accordance with the target amount of bits assigned to each picture.

10. An editing device according to claim 2 wherein the edition control means selectively reuses motion vector information fetched from the source encoded streams in the re-encoding process which is performed by the re-encoding means so as to prevent deterioration in image quality of the edited stream.

11. An editing device according to claim 2 wherein the re-encoding means incorporates
motion detection means for detecting motion of each picture to produce a motion vector, and
motion compensation means for performing motion compensation in accordance with the motion vector detected by the motion detection means, and
the edition control means determines whether or not the motion vector information fetched from the source encoded streams is reused in the re-encoding process which is performed by the re-encoding means, and
controls the re-encoding means to cause the re-encoding means to supply the motion vector fetched from the stream to a motion compensation circuit of the re-encoding means in place of the motion vector detected by the motion detection means when a determination has been made that motion vector information is reused.

12. An editing device according to claim 2 wherein the edition control means set a direction of prediction to a picture which is positioned adjacent to the editing point and which is subjected to the re-encoding process by the re-encoding means so as to prevent prediction from pictures in different source encoded stream positioned opposite with respect to the editing position.

13. An editing device according to claim 2 wherein the edition control means
selectively changes a picture type of a picture which is positioned adjacent to the editing point and which is re-encoded by the re-encoding means so as to prevent deterioration in image quality of the picture included in the edited stream and positioned adjacent to the editing point.

14. An editing device according to claim 2 wherein the edition control means selectively changes the picture type of a picture which is re-encoded by the re-encoding means and which is positioned adjacent to the editing point so as to prevent prediction from pictures in different source encoded streams positioned opposite with respect to the editing point.

15. An editing device according to claim 2 wherein the two source encoded streams include a first encoded stream and a second encoded stream, and
the edition control means selects output pictures from the plurality of pictures which constitute the first encoded stream so as to prevent an output of a future picture in a time axis of presentation as the edited stream to a first editing point set to the first encoded stream select, and
selects output pictures from the plurality of pictures which constitute the second encoded stream so as to prevent an output of a previous picture in a time axis of presentation to a second editing point set to the second encoded stream.

16. An editing device according to claim 2 wherein the two source encoded streams include a first encoded stream and a second encoded stream, and

the edition control means selects output pictures from the plurality of pictures which constitute the first encoded stream so as to prevent an output of a future picture in a time axis of presentation as the edited stream to a first editing point set to the first encoded stream,

selects output pictures from the plurality of pictures which constitute the second encoded stream so as to prevent an output of a previous picture in a time axis of presentation to a second editing point set to the second encoded stream,

sets a picture type and a direction of prediction of a picture which is re-encoded by the re-encoding means and which is positioned adjacent to the editing point,

sets motion vector information fetched from the source encoded stream to a picture which is reused in the re-encoding process which is performed by the re-encoding means,

calculates the target amount of bits in the re-encoding process which is performed by the re-encoding means so as to prevent overflow and underflow of the virtual buffer corresponding to an input buffer of the decoding device for decoding the edited stream,

assigns the target amount of bits to each of pictures to be re-encoded so as to approximate the target amount of bits to an amount of generated bits for each picture in a previous encoding process of the source encoded streams, and

controls the re-encoding means to cause the re-encoding means to perform the re-encoding process for each picture in accordance with the target amount of bits assigned to each picture, the direction of prediction, the picture type and the motion vector.

17. An editing device according to any one of the preceding claims, wherein said editing point setting means is a splicing point setting means for setting respective splicing points,

said edited-stream producing means is a spliced stream producing means for producing a spliced stream; and

said edition control means is a splice control means for controlling the re-encoding means and the spliced stream producing means.

18. An editing method for editing two source encoded streams to produce an edited stream, comprising:

an editing-point setting step for setting respective editing points for each of the two source encoded streams;

a decoding step for decoding the two source encoded streams adjacent to the editing points respectively, and outputting decoded video data;

a re-encoding step for re-encoding the decoded video data to output a re-encoded stream $ST_{RE}$ comprising a plurality of pictures ($A_{(n-P0)+n0}$ to $B_{(m-P0)-m0}$);

an edited-stream producing step for performing switching between the source encoded streams and the re-encoded stream to output the switched stream so as to produce an edited streams; and

an edition control step for controlling the re-encoding step and the edited-stream producing step;

wherein the edition control step includes calculating a target amount of bits for encoding the plurality of pictures in the re-encoded stream so as to prevent overflow and underflow of a virtual buffer corresponding to an input buffer of a decoding device for decoding the edited stream, by analysing a predicted amount of occupation of data in the virtual buffer by calculating a first locus of an amount of occupation of data in the virtual buffer for a first source encoded stream $OST_A$, a second locus of an amount of occupation of data in the virtual buffer for a second source encoded stream $OST_B$, and a third locus of an amount of data in the virtual buffer for an estimated re-encoded stream $ST_{RE}$'; encoded with a bit count value of the streams $OST_A$ and $OST_B$ determining from the third locus an offset amount dependent upon an amount the third locus underflows or overflows the virtual buffer, and an amount of any discontinuity with the second locus, and

the re-encoding step includes encoding the decoded video to generate the re-encoded stream comprising the plurality of re-encoded pictures having a total amount of bits equal to the target amount of bits, the target amount of bits being equal to the total number of bits of the estimated re-encoded stream $ST_{RE}$' corrected by the offset amount.

19. An editing method according to claim 18, wherein said virtual buffer is a VBV buffer which is a video buffer verifier.

20. An editing method according to claim 18, wherein said editing-point setting step comprises a splicing point setting step for setting respective splicing points,

said edited stream producing step comprises a spliced stream producing step to produce a spliced stream; and

said edition control step comprises a splice control step for controlling the re-encoding step and the spliced stream producing step.

**Patentansprüche**

1. Editiereinrichtung zum Editieren von zwei quellen-codierten Datenströmen, welche umfasst:

   eine Editierpunkt-Einstelleinrichtung zum Einstellen entsprechender Editierpunkte für die beiden quellen-codierten Datenströme;
   eine Decodiereinrichtung (14A, 14B) zum Decodieren der beiden quellen-codierten Datenströme benachbart zum Editierpunkt, um decodierte Videodaten zu erzeugen, um entsprechend decodierte Videodaten auszugeben;
   eine Re-Codiereinrichtung (16) zum Re-Codieren der decodierten Videodaten, um einen re-codierten Datenstrom $ST_{RE}$ auszugeben, der mehrere Bilder ($A_{(n-P0)+n0}$ bis $B_{(m-P0)-m0}$) umfasst;
   eine Editierdatenstrom-Erzeugungseinrichtung (17) zum Erzeugen eines editierten Datenstroms durch Schalten der quellen-codierten Datenströme und des re-codierten Datentroms, um Ausgabe zu bewirken; und
   eine Editiersteuereinrichtung (13) zum Steuern der Re-Codiereinrichtung und der Editierdatenstrom-Erzeugungseinrichtung; wobei
   die Editiersteuereinrichtung (13) eine Zielmenge von Bits zum Codieren der mehreren Bilder im re-codierten Datenstrom berechnet, um somit Überlauf und Unterlauf eines virtuellen Puffers zu vermeiden, der einem Eingangspuffer einer Decodiereinrichtung entspricht, um den editierten Strom zu decodieren, durch Analysieren einer Belegungsmenge von Daten im virtuellen Puffer, durch Berechnen einer ersten Orts einer Belegungsmenge von Daten im virtuellen Puffer für einen ersten quellen-codierten Datenstrom $OST_A$, eines zweiten Orts einer Belegungsmenge von Daten im virtuellen Puffer für einen zweiten quellen-codierten Datenstrom OSTe, und eines dritten Orts einer Datenmenge im virtuellen Puffer für einen geschätzten re-codierten Datenstrom $ST_{RE}'$, der mit einem Bit-Zählwert der Datenströme $OST_A$ und $OST_B$ codiert ist, Bestimmen von dem dritten Ort eines Offset-Betrags in Abhängigkeit von einem Betrag, mit dem der dritte Ort den virtuellen Puffer unterläuft oder überläuft, und einem Betrag irgendeiner Diskontinuität mit dem zweiten Ort, und
   die Re-Codiereinrichtung (16) die decodierten Videodaten codiert, um den re-codierten Datenstrom zu erzeugen, der die mehreren re-codierten Bilder umfasst, welche eine Gesamtmenge von Bits haben, welche gleich der Zielmenge von Bits ist, die von der Editiersteuereinrichtung geliefert werden, wobei die Zielmenge von Bits gleich der Gesamtzahl von Bits des geschätzten re-codierten Datenstroms $ST_{RE}$ ist, der mit dem Offset-Betrag korrigiert wurde.

2. Editiereinrichtung nach Anspruch 1, wobei der virtuelle Puffer ein VBV-Puffer ist, der ein Videopufferverifizierer ist und die Editiereinrichtung dazu dient, zwei MPEG-codierte Quellendatenströme zu editieren.

3. Editiereinrichtung nach Anspruch 1, wobei
   die Editiersteuereinrichtung die Zielmenge von Bits im Re-Codierprozess berechnet, der durch die Re-Codiereinrichtung durchgeführt wird, um somit Unterbrechung eines Orts der Belegungsmenge von Daten in dem virtuellen Puffer bei einem Schaltpunkt zwischen den quellen-codierten Datenströmen und dem re-codierten Datenstrom oder an dem Editierpunkt der re-codierten Stroms zu verhindern.

4. Editiereinrichtung nach Anspruch 1, wobei die Editiersteuereinrichtung die Re-Codiereinrichtung steuert, um den Ort der Belegungsmenge von Daten im virtuellen Puffer entsprechend dem re-codierten Datenstrom $ST_{RE}$ an einen Ort einer Belegungsmenge von Daten im virtuellen Puffer anzunähern, der als ein ursprünglicher Ort der quellen-codierten Datenströme angenommen wird.

5. Editiereinrichtung nach Anspruch 1, wobei die Editiersteuereinrichtung Codierparameter heranzieht, welche in den quellen-codierten Datenströmen enthalten sind und selektiv die herangezogenen codierten Parameter wiederverwendet, wenn der Re-Codierprozess in der Re-Codiereinrichtung durchgeführt wird, um somit Verschlechterung der Bildqualität im editierten Datenstrom zu verhindern.

6. Editiereinrichtung nach Anspruch 1, wobei die Editiersteuereinrichtung Information über Quantisierercharakteristik heranzieht, welche in den quellen-codierten Datenströme enthalten ist und die Re-Codiereinrichtung steuert, um zu bewirken, dass die Re-Codiereinrichtung den Re-Codierprozess gemäß der herangezogenen Quantisierercharakteristik durchführt.

7. Editiereinrichtung nach Anspruch 1, wobei die Editiersteuereinrichtung für jedes Bild Information über die Quantisierercharakteristik, welche in den quellen-codierten Datenströmen enthalten ist, heranzieht,
   eine neue Quantisierercharakteristik gemäß der Quantisierercharakteristik berechnet, welche von den quellen-codierten Datenströmen und der berechneten Zielmenge von Bits herangezogen wurde, und
die Re-Codiereinrichtung steuert, um zu bewirken, dass Re-Codiereinrichtung den Re-Codierprozess gemäß der berechneten neuen Quantisierercharakteristik durchführt.

8. Editiereinrichtung nach Anspruch 1, wobei die Editiersteuereindchtung die Zielmenge von Bits jedem Bild zuteilt, welches zu re-codieren ist, um eine Referenz zu einer Quantisierercharakteristik zu bilden, welche in einem vorherigen Codierprozess erzeugt wurde und welche in den quellen-codierten Datenströmen enthalten ist, und
die Re-Codiereinrichtung steuert, um zu bewirken, dass die Re-Codiereinrichtung den Re-Codierprozess für jedes Bild gemäß der Zielmenge von Bits, welche jedem Bild zugeteilt ist, durchführt.

9. Editiereinrichtung nach Anspruch 1, wobei die Editiersteuereinrichtung die Zielmenge für Bits jedem Bild, welches zu re-codieren ist, zuteilt, um somit die Zielmenge von Bits an eine Menge erzeugter Bits für jedes Bild in einem vorherigen Codierprozess des quehen-codierten Datenstroms anzunähern, und
die Re-Codiereinrichtung steuert, um zu bewirken, dass die Re-Codiereinrichtung den Re-Codierprozess für jedes Bild gemäß der Zielmenge von Bits, welche jedem Bild zugeordnet ist, durchführt.

10. Editiereinrichtung nach Anspruch 2, wobei die Editiersteuereinrichtung selektiv die Bewegungsvektorinformation wiederverwendet, welche von den quellen-codierten Datenströmen im Re-Codierprozess herangezogen wurde, der durch die Re-Codiereinrichtung durchgeführt wird, um somit eine Verschlechterung der Bildqualität des editierten Datenstroms zu verhindern.

11. Editiereinnchtung nach Anspruch 2, wobei die Re-Codiereinrichtung enthält:

    eine Bewegungserfassungseinrichtung zum Erfassen von Bewegung jedes Bilds, um einen Bewegungsvektor zu erzeugen, und
    eine Bewegungskompensationseinrichtung zum Durchführen von Bewegungskompensation gemäß dem Bewegungsvektor, der durch die Bewegungsvktoreinrichtung erfasst wurde, und
    die Editiersteuereinrichtung bestimmt, ob oder nicht die Bewegungsvektorinformation, welche von der quellen-codierten Datenströmen geholt wurde, im Re-Codierprozess wiederverwendet wird, der durch die Re-Codiereinrichtung durchgeführt wird, und
    die Re-Codiereinrichtung steuert, um zu bewirken, dass die Re-Codiereinrichtung den Bewegungsvektor, der von dem Datenstrom geholt wird, zu einer Bewegungskompensationsschaltung der Re-Codiereinrichtung anstelle des Bewegungsvektors liefert, der durch die Bewegungserfassungseinrichtung erfasst wurde, wenn eine Bestimmung getroffen wurde, dass Bewegungsvektorinformation wiederverwendet wird.

12. Editiereinrichtung nach Anspruch 2, wobei die Editiersteuereinrichtung eine Vorhersagerichtung auf ein Bild setzt, welches benachbart zu dem Editierpunkt positioniert ist, und welches dem Re-Codierprozess durch die Re-Codiereinrichtung unterworfen wird, um somit Vorhersage von Bildern in einem anderen quellen-codierten Datenstrom zu verhindern, der in Bezug auf die Editierposition abgewandt positioniert.

13. Editiereinrichtung nach Anspruch 2, wobei die Bditiersteuereinrichtung eine Bildart eines Bilds selektiv ändert, welches benachbart zu dem Editierpunkt positioniert ist und welches durch die Re-Codiereinrichtung re-codiert wird, um somit Verschlechterung der Bildqualität des Bilds zu verhindern, welches im Editierstrom enthalten ist, und welches benachbart zum Editierpunkt positioniert ist.

14. Editiereinrichtung nach Anspruch 2, wobei die Editiersteuereinrichtung selektiv die Bildart eines Bilds ändert, welches durch die Re-Codiereinrichtung re-codiert wird und welches benachbart zu dem Editierpunkt positioniert ist, um somit Vorhersage von Bildern in anderen quellen-codierten Datenströmen zu verhindern, welche abgewandt in Bezug auf den Editierpunkt positioniert sind.

15. Editiereinrichtung nach Anspruch 2, wobei die beiden quellen-codierten Datenströme einen ersten Codierstrom und einen zweiten Codierstrom aufweisen, und
die Editiersteuereinrichtung Ausgabebilder von den mehreren Bildern auswählt, welche den ersten Codierstrom bilden, um somit eine Ausgabe eines zukünftigen Bilds in einer Zeitachse von Darstellung als den Editierstrom zu einem ersten Editierpunkt zu verhindern, der auf den ersten ausgewählten Codierstrom eingestellt ist, und
Ausgabebilder von den mehreren Bildern auswählt, welche den zweiten Codierstrom bilden, um somit eine Ausgabe eines vorherigen Bilds in einer Zeitachse von Darstellung zu einem zweiten Editierpunkt zu verhindern, der auf den zweiten Codierstrom eingestellt ist.

**16.** Editiereinrichtung nach Anspruch 2, wobei die beiden quellen-codierten Datenströme einen ersten Codierdatenstrom und einen zweiten Codierdatenstrom aufweisen, und

die Editiersteuereinrichtung Ausgabebilder von den mehreren Bildern auswählt, welche den ersten Codierdatenstrom bilden, um somit eine Ausgabe eines zukünftigen Bilds in einer Zeitachse der Darstellung als den Editierstrom zu einem ersten Editiezpunkt zu verhindern, der auf den ersten Codierdatenstrom eingestellt ist,

Ausgabebilder von den mehreren Bildern auswählt, welche den zweiten Codierdatenstrom bilden, um somit eine Ausgabe eines vorherigen Bilds in einer Zeitachse der Darstellung zu einem zweiten Editierpunkt zu verhindern, der auf den zweiten Codierdatenstrom eingestellt ist,

eine Bildart und eine Vorhersagerichtung eines Bilds einstellt, welches durch die Re-Codiereinrichtung re-codiert wird und welches benachbart zu dem Editierpunkt positioniert ist,

Bewgungsvektorinformation, welche von dem quellen-codierten Datenstrom herangezogen wird, auf ein Bild einstellt, welches in dem Re-Codierprozess wiederverwendet wird, welcher durch die Re-Codiereinrichtung durchgeführt wird,

die Zielmenge von Bits in dem Re-Codierprozess berechnet, der durch die Re-Codiereinrichtung durchgeführt wird, um somit Überlauf und Unterlauf des virtuellen Puffers zu verhindern, welcher einem Eingangspuffer der Decodiereinrichtung zum Decodieren des Editierestroms entspricht,

die Zielmenge von Bits jedem von den Bildern zuteilt, welche zu re-codieren sind, um die Zielmenge von Bits an eine Menge erzeugter Bits für jedes Bild in einem vorherigen Codierprozess der quellen-codierten Datenströme anzunähern, und

die Codiereinrichtung steuert, um zu bewirken, dass die Re-Codiereinrichtung den Re-Codierprozess für jedes Bild gemäß der Zielmenge von Bits, welche jedem Bild zugeteilt ist, der Vorhersagerichtung, der Bildart und dem Bewegungsvektor durchführt.

**17.** Editiereinrichtung nach einem der vorhergehenden Ansprüche, wobei die Editierpunkt-Einstelleinrichtung eine Spleißpunkt-Einstelleinrichtung ist, um entsprechende Spleißpunkte einzustellen,

die Editierstrom-Erzeugungseinrichtung eine Spleißstrom-Erzeugungseinrichtung ist, um einen Spleißstrom zu erzeugen; und

die Editiersteuereinrichtung eine Spleißsteuereinrichtung ist, um die Re-Codiereinrichtung und die Spleißstrom-Erzeugungseinrichtung zu steuern.

**18.** Editierverfahren zum Editieren von zwei quellen-codierten Datenströmen, um einen editierten Datenstrom zu erzeugen, welches umfasst:

einen Editierpunkt-Pinstellungsschritt zum Einstellen entsprechender Editierpunkte für jeden der beiden quellen-codierten Datenströme;

einen Decodierschritt zum jeweiligen Decodieren der beiden quellen-codierten Datenströme benachbart zu den Editierpunkten, und Ausgeben decodierter Videodaten;

einen Re-Codierschritt zum Re-Codieren der decodierten Videodaten $ST_{RE}$, die mehrere Bilder ($A_{(n-P0)-n0}$ bis $B_{(m-P0)-m0}$) aufweisen, um einen re-codierten Datenstrom auszugeben;

einen Editierstrom-Erzeugungsschritt zum Durchführen von Schalten zwischen den quellen-codierten Datenströmen und dem re-codierten Datenstrom, um den geschalteten Datenstrom auszugeben, um einen editierten Datenstrom zu erzeugen, und

einen Editiersteuerschritt zum Steuern des Re-Codierschritts und des Editierstrom-Erzeugungsschritts;

wobei der Editiersteuerschritt das Berechnen einer Zielmenge von Bits zum Codieren der mehreren Bilder im re-codierten Datenstrom umfasst, um somit Überlauf und Unterlauf eines virtuellen Puffers zu verhindern, der einem Eingangspuffer einer Decodiereinrichtung entspricht, um den editierten Datenstrom zu decodieren, durch Analysieren einer vorhergesagten Belegungsmenge von Daten im virtuellen Puffer durch Berechnen eines ersten Orts einer Belegungsmenge von Daten im virtuellen Puffer für einen ersten quellen-codierten Datenstrom $OST_A$, eines zweiten Orts einer Belegungsmenge von Daten im virtuellen Puffer für einen zweiten quellen-codierten Datenstrom $OST_B$, und eines dritten Orts einer Datenmenge im virtuellen Puffer für einen geschätzten re-codierten Datenstrom $ST_{RE}$, der mit einem Bit-Zählwert der Ströme $OST_A$ und $OST_B$ codiert wurde, um von dem dritten Ort einen Offset-Betrag in Abhängigkeit von dem Betrag zu bestimmen, mit dem der dritte Ort den virtuellen Puffer unterläuft oder überläuft, und einer Menge irgendwelcher Diskontinuität mit dem zweiten Ort, und der Re-Codierschritt das Codieren des decodierten Videos aufweist, um den re-codierten Datenstrom zu erzeugen, der die mehreren re-codierten Bilder umfasst, wobei die Zielmenge von Bits gleich der Gesamtzahl von Bits des geschätzten re-codierten Datenstroms $ST_{RE}$ ist, der durch die Offset-Menge korrigiert wurde.

**19.** Editierverfahren nach Anspruch 18, wobei der virtuelle Puffer ein VBV-Puffer ist, der ein Videopufferverifizierer ist.

**20.** Editierverfahren nach Anspruch 18, wobei der Editierpunkt-Einstellschritt einen Spleißpunkt-Einstellungsschritt zum Einstellen entsprechender Spleißpunkte umfasst,
der Editierstrom-Erzeugungsschritt einen Spleißstrom-Erzeugungsschritt umfasst, um einen Spleißstrom zu erzeugen; und
der Editiersteuerschritt einen Spleißsteuerschritt aufweist, um den Re-Codierschritt und den Spleißstrom-Erzeuguugsschritt zu steuern.

**Revendications**

**1.** Dispositif d'édition pour éditer deux flots continue encodés de source, comprenant :

des moyens de détermination de point d'édition pour déterminer des points d'édition respectifs pour les deux flots continus encodés de source ;
des moyens de décodage (14A, 14B) pour décoder les deux flots continus encodés de source adjacents au point d'édition pour produire des données vidéo décodées, respectivement pour délivrer des données vidéo décodées ;
des moyens de réencodage (16) pour réencoder les données vidéo décodées pour délivrer un flot continu réencodé $ST_{RE}$ comprenant une pluralité d'images ($A_{(n-P0)+n0}$ à $B_{(m-P0)-m0}$) ;
des moyens de production de flot continu édité (17) pour produire un flot continu édité en commutant les flots continus encodés de source et le flot continu réencodé pour effectuer une sortie ; et
des moyens de commande d'édition (13) pour commander les moyens de réencodage et les moyens de production de flot continu édité ; dans lequel
les moyens de commande d'édition (13) calculent une quantité cible de bits pour encoder la pluralité d'images dans le flot continu de manière à éviter un débordement et un sous-remplissage d'une mémoire tampon virtuelle correspondant à une mémoire tampon d'entrée d'un dispositif de décodage pour décoder le flot continu édité, en analysant une quantité d'occupation de données dans la mémoire tampon virtuelle, eu calculant un premier lieu d'une quantité d'occupation de données dans la mémoire tampon virtuelle pour un premier flot continu encodé de source $OST_A$, un deuxième lieu d'une quantité d'occupation de données dans la mémoire tampon virtuelle pour un deuxième flot continu encodé de source $OST_B$, et un troisième lieu d'une quantité de données dans la mémoire tampon virtuelle pour un flot continu réencodé estimé $ST_{RE}$, encodé avec une valeur de compte de bits des flots continus $OST_A$ et $OST_B$, en déterminant à partir du troisième lieu une quantité de décalage qui dépend d'une quantité de laquelle le troisième lieu provoque un sous-remplissage ou un débordement de la mémoire tampon virtuelle, et une quantité de toute discontinuité avec le deuxième lieu, et
les moyens de réencodage (16) encodent les données vidéo décodées pour générer le flot continu réencodé comprenant la pluralité d'images réencodées ayant une quantité totale de bits égale à la quantité cible de bits délivrés par les moyens de commande d'édition, la quantité cible de bits étant égale au nombre total de bits du flot continu réencodé estimé $ST_{RE}$, corrigé par la quantité de décalage.

**2.** Dispositif d'édition selon la revendication 1, dans lequel la mémoire tampon virtuelle est une mémoire tampon VBV qui est un vérificateur de mémoire tampon vidéo et le dispositif d'édition sert à éditer deux flots continus encodés MPEG de source.

**3.** Dispositif d'édition selon la revendication 1, dans lequel
les moyens de commande d'édition calculent la quantité cible de bits dans le processus de réencodage qui est effectué par les moyens de réencodage de manière à éviter une discontinuité d'un lien de quantité d'occupation de données dans la mémoire tampon virtuelle à un point de commutation entre les flots continus encodés de source et le flot continu réencodé ou au point d'édition du flot continu réencodé.

**4.** Dispositif d'édition selon la revendication 1, dans lequel les moyens de commande d'édition commandent les moyens de réencodage de manière à approcher le lieu de la quantité d'occupation de données dans la mémoire tampon virtuelle correspondant au flot continu réencodé $ST_{RE}$ d'un lieu d'une quantité d'occupation de données dans la mémoire tampon virtuelle qui est supposé être un lieu d'origine des flots continus encodés de source.

**5.** Dispositif d'édition selon la revendication 1, dans lequel les moyens de commande d'édition extraient les paramètres d'encodage inclus dans les flots continue encodés de source et réutilisent de manière sélective les paramètres d'encodage extraite lorsque le processus de réencodage est effectue dans les moyens de réencodage de manière à éviter une détérioration de la qualité d'image du flot continu édité.

**6.** Dispositif d'édition selon la revendication 1, dans lequel les moyens de commande d'édition extraient des informations concernant une caractéristique de quantificateur incluse dans les flots continus encodés de source et commandent les moyens de réencodage pour amener les moyens de réencodage à effectuer le processus de réencodage conformément à la caractéristique de quantificateur extraite.

**7.** Dispositif d'édition selon la revendication 1, dans lequel les moyens de commande d'édition extraient, pour chaque image, des informations concernant une caractéristique de quantificateur incluse dans les flots continus encodés de source,
calculent une nouvelle caractéristique de quantificateur conformément à la caractéristique de quantificateur extraite des flots continus encodés de source et à la quantité cible de bits calculée, et
commandent les moyens de réencodage pour amener les moyens de réencodage à effectuer le processus de réencodage conformément à la nouvelle caractéristique de quantificateur calculée.

**8.** Dispositif d'édition selon la revendication 1, dans lequel les moyens de commande d'édition attribuent la quantité cible de bits à chaque image à réencoder en faisant référence à une caractéristique de quantificateur produite dans un processus d'encodage précédent et incluse dans les flots continus encodés de source, et
commandent les moyens de réencodage pour amener les moyens de réencodage à effectuer le processus de réencodage pour chaque image conformément à la quantité cible de bits attribuée à chaque image.

**9.** Dispositif d'édition selon la revendication 1, dans lequel les moyens de commande d'édition attribuent la quantité cible de bits à chaque image à réencoder de manière à approcher la quantité cible de bits d'une quantité de bits générés pour chaque image dans un processus d'encodage précédent du flot continu encodé de source, et
commandent les moyens de réencodage pour amener les moyens de réencodage à effectuer le processus de réencodage pour chaque image conformément à la quantité cible de bits attribuée à chaque image.

**10.** Dispositif d'édition selon la revendication 2, dans lequel les moyens de commande d'édition réutilisent de manière sélective les informations de vecteur de mouvement extraites des flots continus encodés de source dans le processus de réencodage qui est effectué par les moyens de réencodage de manière à éviter une détérioration de la qualité d'image du flot continu édité.

**11.** Dispositif d'édition selon la revendication 2, dans lequel les moyens de réencodage incorporent
des moyens de détection de mouvement pour détecter un mouvement de chaque image pour produire un vecteur de mouvement, et
des moyens de compensation de mouvement pour appliquer une compensation de mouvement conformément au vecteur de mouvement détecté par les moyens de détection de mouvement, et
les moyens de commande d'édition déterminent si, oui ou non, les informations de vecteur de mouvement extraites des flots continus encodés de source sont réutilisées dans le processus de réencodage qui est effectué par les moyens de réencodage, et
commandent les moyens de réencodage pour amener les moyens de réencodage à fournir le vecteur de mouvement extrait du flot continu à un circuit de compensation de mouvement des moyens de réencodage à la place du vecteur de mouvement détecté par les moyens de détection de mouvement lorsqu'il a été déterminé que les informations de vecteur de mouvement sont réutilisées.

**12.** Dispositif d'édition selon la revendication 2, dans lequel les moyens de commande d'édition déterminent une direction de prédiction pour une image qui est positionnée adjacente au point d'édition et qui est soumise au processus de réencodage par les moyens de réencodage de manière à éviter une prédiction à partir d'images dans un flot continu encodé de source différent positionnées à l'opposé par rapport à la position d'édition.

**13.** Dispositif d'édition selon la revendication 2, dans lequel les moyens de commande d'édition
modifient de manière sélective un type d'image d'une image qui est positionnée adjacente au point d'édition et qui est réencodée par les moyens de réencodage de manière à éviter une détérioration de la qualité d'image de l'image incluse dans le flot continu édité et positionnée adjacente au point d'édition.

**14.** Dispositif d'édition selon la revendication 2, dans lequel les moyens de commande d'édition modifient de manière sélective le type d'image d'une image qui est réencodée par les moyens de réencodage et qui est positionnée adjacente au point d'édition de manière à éviter une prédiction à partir d'images de différents flots continus encodés de source positionnées à l'oppose par rapport au point d'édition.

**15.** Dispositif d'édition selon la revendication 2, dans lequel les deux flots continus encodés de source comprennent un premier flot continu encodé et un deuxième flot continu encodé, et

les moyens de commande d'édition sélectionnent des images de sortie parmi la pluralité d'images qui constituent le premier flot continu encodé de manière à éviter une sortie d'une image future sur un axe des temps de présentation en tant que flot continu édité à un premier point d'édition déterminé pour la sélection du premier flot continu encodé, et sélectionnent des images de sortie parmi la pluralité d'images qui constituent le deuxième flot continu encodé de manière à éviter une sortie d'une image précédente sur un axe des temps de présentation à un deuxième point d'édition déterminé pour le deuxième flot continu encodé.

**16.** Dispositif d'édition selon la revendication 2, dans lequel les deux flots continus encodés de source comprennent un premier flot continu encodé et un deuxième flot continu encodé, et

les moyens de commande d'édition sélectionnent des images due sertie parmi la pluralité d'images qui constituent le premier flot continu encodé due matière à éviter une sortie d'une image future sur un axe des temps de présentation en tant que flot continu édité à un premier point d'édition déterminé pour le premier flot continu encodé,

sélectionnent des images de sortie parmi la pluralité d'images qui constituent le deuxième flot continu encodé de manière à éviter une sortie d'une image précédente sur un axe des temps de présentation à un deuxième point d'édition déterminé pour le deuxième flot continu encodé,

déterminent un type d'image et une direction de prédiction d'une image qui est réencodée par les moyens de réencodage est qui est positionnée adjacente au point d'édition,

déterminent des informations de vecteur de mouvement extraites du flot continu encodé de source pour une image qui est réutilisée dans le processus de réencodage qui est effectué par les moyens de réencodage,

calculent la quantité cible de bits dans le processus de réencodage qui est effectué par les moyens de réencodage de manière à éviter un débordement et un sous-remplissage de la mémoire tampon virtuelle correspondant à une mémoire tampon d'entrée du dispositif de décodage pour décoder le flot continu édité,

attribuent la quantité cible de bits à chacune des images à réencoder de manière à approcher la quantité cible de bits d'une quantité de bits générés pour chaque image dans un processus de codage précèdent des flots continus encodés de source, et

commandent les moyens de réencodage pour amener les moyens de réencodage à effectuer le processus de réencodage pour chaque image conformément à la quantité cible de bits attribuée à chaque image, à la direction de prédiction, au type d'image et au vecteur de mouvement.

**17.** Dispositif d'édition selon l'une quelconque des revendications précédentes, dans lequel lesdits moyens de détermination de point d'édition sont des moyens de détermination de point de raccordement pour déterminer des points de raccordement respectifs,

lesdits moyens de production de flot continu édité sont des moyens de production de flot continu raccordé pour produire un flot continu raccordé ; et

lesdits moyens de commande d'édition sont des moyens de commande de raccord pour commander les moyens de réencodage et les moyens de production de flot continu raccordé.

**18.** Procédé d'édition pour éditer deux flots continus encodés de source pour produire un flot continu édité, comprenant :

une étape de détermination de point d'édition pour déterminer des points d'édition respectifs pour chacun des deux flots continus encodés de source ;

une étape de décodage pour décoder les deux flots continus encodés de source adjacents aux points d'édition respectivement, et délivrer des données vidéo décodées ;

une étape de réencodage pour réencoder les données vidéo décodées pour délivrer un flot continu réencodé $ST_{RE}$ comprenant une pluralité d'images ($A_{(n-P0)+n0}$ à $B_{(m-p0)-m0}$) ;

une étape de production de flot continu édité pour effectuer une commutation entre les flots continus encodés de source et le flot continu réencodé pour délivrer le flot continu commuté de manière à produire des flots continus édités ; et

une étape de commande d'édition pour commander l'étape de réencodage et l'étape de production de flot continu édité;

dans lequel l'étape de commande d'édition comprend le calcul d'une quantité cible de bits pour encoder la pluralité d'images dans le flot continu réencodé de manière à éviter un débordement et un sous-remplissage d'une mémoire tampon virtuelle correspondant à une mémoire tampon d'entrée d'un dispositif de décodage pour décoder le flot continu édité, en analysant une quantité prédite d'occupation de données dans la mémoire tampon virtuelle en calculant un premier lieu d'une quantité d'occupation de données dans la mémoire tampon virtuelle pour un premier flot continu encodé de source $OST_A$, un deuxième lieu d'une quantité d'occupation de données dans la mémoire tampon virtuelle pour un deuxième flot continu encodé de source $OST_B$, et un troisième lieu d'une quantité de données dans la mémoire tampon virtuelle pour un flot continu réencodé estimé $ST_{RE}$, encodé avec une valeur de compte de bits des flots continus $OST_A$ et $OST_B$, en déterminant à partir du troisième lieu une quantité de décalage qui dépend d'une quantité de laquelle le troisième lieu provoque un sous-remplissage ou un débordement de la mémoire tampon virtuelle, et une quantité de toute discontinuité avec le deuxième lieu ; et.

l'étape de réencodage comprend l'encodage de la vidéo décodée pour générer le flot continu réencodé comprenant la pluralité d'images réencodées ayant une quantité totale de bits égale à la quantité cible de bits, la quantité cible de bits étant égale au nombre total de bits du flot continu réencodé estimé $ST_{RE}$, corrigé par la quantité de décapage.

19. Procédé d'édition selon la revendication 18, dans lequel ladite médire tampon virtuelle est une mémoire tampon VBV qui est un vérificateur de mémoire tampon vidéo.

20. Procédé d'édition selon la revendication 18, dans lequel ladite étape de détermination de point d'édition comprend une étape de détermination de point de raccordement pour déterminer des points de raccordement respectifs,

ladite étape de production de flot continu édité comprend une étape de production de flot continu raccordé pour produire un flot continu raccordé ; et

ladite étape de commande d'édition comprend une étape de commande de raccord pour commander l'étape de réencodage et l'étape de production de flot continu raccordé.

FIG.1

EP 0 923 243 B1

I  P  I  B

B  B  B  P  B

B  P  B  B  B  P  B  B  B  B  B  B  P  B

131

132

vbv delay

$T_p$

FIG.2

(a) order of pictures of input video data

(b) order of rearranged pictures

(c) encoded video stream

FIG.3

(a) input

| B | B | P | B1 | B2 | I3 | B4 | B5 | P6 | B7 | B8 | P9 | B10 | B11 | P12 | B13 | B14 | P15 | B | B | I | |

(b) after rearrangement

| | | P | | | I3 | B1 | B2 | P6 | B4 | B5 | P9 | B7 | B8 | P12 | B10 | B11 | P15 | B13 | B14 | | |

(c) FM1

| | | | P | P | P | I3 | I3 | I3 | P6 | P6 | P6 | P9 | P9 | P9 | P12 | P12 | P12 | P15 | P15 | P15 |

(d) FM2

| | | | | P | P | | I3 | I3 | | P6 | P6 | | P9 | P9 | | P12 | P12 | | P15 |

(e) ES

| | P | | | | | | | | | | | | | | | | | | | | |

I3
B1-I3-P
B2-I3-P
P6-I3
B4-P6-I3
B5-P6-I3
P9-P6
B7-P9-P6
B8-P9-P6
P12-P9
B10-P12-P9
B11-P12-P9
P15-P12
B13-P15-P12
B14-P15-P12

FIG.4

**FIG.5**

EP 0 923 243 B1

(a)ES

P

I3
B1-I3-P
B2-I3-P
P6-I3
B4-P6-I3
B5-P6-I3
P9-P6
B7-P9-P6
B8-P9-P6
P12-P9
B10-P12-P9
B11-P12-P9
P15-P12
B13-P15-P12
B14-P15-P12

(b)FM1 | P | P | P | I3 | I3 | I3 | P6 | P6 | P6 | P9 | P9 | P9 | P12 | P12 | P12 | P15 | P15 | P15 |

(c)FM2 | P | P | I3 | I3 | P6 | P6 | P9 | P9 | P12 | P12 | P15 |

(d)output | B1 | B2 | I3 | B4 | B5 | P6 | B7 | B8 | P9 | B10 | B11 | P12 | B13 | B14 | P15 |

FIG.6

FIG.7

FIG.8

FIG.9

**FIG.10**

(a) ST$_{SP}$

ST$_A$ — ST$_B$

I  B B  P  B B  P  B B   I   B B  P  B B

(b) order of presentation

P B B I B B P B B P   B B I B B P

PTS

EP 0 923 243 B1

(a) $ST_{SP}$

(b) order of
presentation

FIG.11

(a) ST$_{SP}$

(b) order of presentation

FIG.12

FIG.13

(a) amount of occupation in VBV buffer

vbv_delay

(b) $ST_{SP}$

(c) timing of picture generation

(d) order of pictures in decoded data

FIG.14

EP 0 923 243 B1

(a) VBV$_A$

(b) ST$_B$

GOP

FIG.15

(a) VBV_SP

(b) ST_SP

FIG.16

EP 0 923 243 B1

EP 0 923 243 B1

FIG.17

FIG.18

FIG.19

EP 0 923 243 B1

FIG.20

(a) $ST_A$

(b) $ST_B$

FIG.21

(a) $ST_A$

(b) order of presentation

(c) order of presentation

(d) $ST_B$

FIG.22

EP 0 923 243 B1

$B_{(m-p_0)-1}$

$B_{(m-p_0)-2}$

$B_{(m-p_0)-m_0}$

$A_{(n-p_0)+n_0}$

$B_{m-p_0}$

$A_{n-p_0}$

$ST_A$

(a) order of presentation

I B B P B B P B B I B B P B B

$ST_B$

$T_{RE}$

$B_{m-p_0}$

$ST_{SP}$

P B B P B B

I B B

B B P B B

(b) $ST_{SP}$

$A_{n-p_0}$

I

P B B

$OST_A$ $ST_{RE}$ $OST_B$

FIG.23

FIG.24

FIG.25

(a) order of presentation

(b)    $ST_{SP}$

FIG.26

FIG.27

FIG.28

FIG.29

FIG.30

EP 0 923 243 B1

Start

**S10**
Set splicing point and re-encoding range

**S11**
Adjust phase of splicing point of each stream

**S12**
Select pictures to be re-encoded

**S13**
Start parameter setting process

$A_{(n-P0)+n0}$
$\sim A_{(n-P0)+1}$

**S14**
Picture to be subjected to parameter setting process is $A_{n-P0}$?

NO

YES **S15**
Picture type of $A_{n-P0}$

B

PorI

**S16**
Two or more B pictures exist in front of $A_{n-P0}$?

NO

YES

**S17**
Don't change picture type

**S18**
Change picture type from B to P

**S19**
Don't change picture type

**S20**
Don't change picture type

**S21**
Set direction of prediction and previous motion vector

**S22**
Setting of parameters to all of pictures $A_{(n-P0)+n0}$ to $A_{n-P0}$ completed?

NO

YES

①

FIG.31

①

Picture to
be subject to parameter
setting process
is $B_{m-P0}$? — S23

NO — $B_{(m-P0)-1} \sim B_{(m-P0)-m0}$

YES — S24

Picture type of $B_{m-P0}$

S25 — B — Don't change picture type

P — S26 — Change picture type to I picture

I — S27 — Don't change picture type

S28 — Don't change picture type

Set direction of prediction and set previous motion vector — S29

NO

Setting of parameters to all of pictures $B_{m-P0}$ to $B_{(m-P0)-m0}$ completed? — S30

YES

Calculate target amount of bits ($TB_{P0}$) — S31

Assign optimum quantizen step to each picture — S32

Decode each picture — S33

Re-encode each picture — S34

Output spliced stream — S35

End

FIG.32

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 9708898 A

- JP 08149408 A

### Non-patent literature cited in the description

- **Wee et al.** *Splicing MPEG Video Streams in the Compressed Domain,* 1997, 225-230